(19) Europäisches Patentamt
European Patent Office
Office européen des brevets

(11) EP 2 219 774 B1

# (12) FASCICULE DE BREVET EUROPEEN

(45) Date de publication et mention de la délivrance du brevet:
**13.07.2016 Bulletin 2016/28**

(21) Numéro de dépôt: **08847772.4**

(22) Date de dépôt: **29.10.2008**

(51) Int Cl.:
***B01J 13/00*** *(2006.01)*

(86) Numéro de dépôt international:
**PCT/EP2008/064674**

(87) Numéro de publication internationale:
**WO 2009/059919 (14.05.2009 Gazette 2009/20)**

## (54) DISPERSION COLLOÏDALE DE PARTICULES MINERALES DANS UNE PHASE LIQUIDE COMPRENANT UN COPOLYMERE AMPHOLYTE

KOLLOIDALE DISPERSION VON ANORGANISCHEN TEILCHEN IN EINER EIN AMPHOLYTISCHES COPOLYMER UMFASSENDEN FLÜSSIGEN PHASE

COLLOIDAL DISPERSION OF INORGANIC PARTICLES IN A LIQUID PHASE COMPRISING AN AMPHOLYTIC COPOLYMER

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **09.11.2007 FR 0707872**

(43) Date de publication de la demande:
**25.08.2010 Bulletin 2010/34**

(73) Titulaire: **Rhodia Opérations**
**93306 Aubervilliers (FR)**

(72) Inventeurs:
- **CRINIERE, Guillaume**
**1050 Ixelles (BE)**
- **PITOIS, Claire**
**S-17272 Sunbyberg (SE)**
- **DESTARAC, Mathias**
**31000 TOULOUSE (FR)**

(74) Mandataire: **Senninger, Thierry et al**
**Rhodia Operations**
**Département Brevets**
**Bureau 0.121**
**40, rue de la Haie Coq**
**93306 Aubervilliers Cedex (FR)**

(56) Documents cités:
**FR-A- 2 894 585 US-B1- 6 905 814**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 219 774 B1

## Description

La présente invention concerne une dispersion colloïdale de particules minérales dans une phase liquide qui comprend un copolymère ampholyte.

Les dispersions colloïdales (ou sols) d'oxydes et/ou d'oxydes hydratés (hydroxydes) métalliques, sont bien connus de l'homme du métier et leurs modes d'obtention ont été largement décrits dans l'art antérieur. Les sols de cérium sont bien connus de même que les sols de zircone ou d'oxydes de titane. En ce qui concerne les sols d'oxyde de zircone, par exemple, on pourra notamment se référer au Journal of Gel Science Technology, vol. 1, p. 223 (1994). On peut également citer l'article de Chemical Materials, vol. 10, pp. 3217-3223 (1998), en ce qui concerne les sols d'oxyde de titane.

US 6 905 814 décrit une dispersion colloïdale d'oxyde de titane contenant un copolymère ampholyte.

Selon la nature de l'élément métallique mis en oeuvre, ces dispersions peuvent présenter un grand intérêt pour des applications dans le domaine de la catalyse où elles servent comme source de particules nanométriques dans la préparation de catalyseurs supportés ou dans le domaine de la protection anti-UV. Ces dispersions sont aussi intéressantes dans le domaine de l'industrie électronique où elles peuvent être utilisées pour le polissage de diverses pièces comme les disques ou les composés diélectriques.

Un des problèmes importants liés à ces dispersions est leur stabilité, tout particulièrement leur stabilité en fonction du pH. Les dispersions doivent être stables, on entend par là que les particules colloïdales qui la constituent doivent rester en suspension dans la phase liquide sans qu'il se produise de décantation sur une durée suffisante pour une utilisation optimale. En outre, on recherche des dispersions qui soient stables sur une gamme de pH importante ce qui permet de les utiliser efficacement dans des applications et dans des conditions les plus variées.

L'objet de l'invention est de fournir de telles dispersions.

Dans ce but, la dispersion colloïdale de particules minérales dans une phase liquide selon l'invention est caractérisée en ce qu'elle contient un copolymère ampholyte comprenant au moins une chaine macromoléculaire B et une partie A liée à une unique extrémité d'au moins une chaine macromoléculaire B, dans lequel:

- la chaine macromoléculaire B comprend des unités $B_C$ cationiques, dérivant de monomères $B_C$ cationiques,
- la partie A est un groupement polymérique ou non polymérique comprenant au moins un groupe anionique ou potentiellement anionique.

D'autres caractéristiques, détails et avantages de l'invention apparaîtront encore plus complètement à la lecture de la description qui va suivre faite en référence aux dessins annexés dans lesquels :

- la figure 1 donnent des courbes de potentiel zêta obtenues pour un produit de l'invention et un produit de l'art antérieur;
- la figure 2 est une courbe de potentiel zêta obtenues pour un autre produit de l'invention et un produit de l'art antérieur.

Pour la suite de la description, l'expression dispersion colloïdale ou sol de particules minérales désigne tout système constitué de fines particules solides de dimensions colloïdales, c'est à dire des particules dont la taille est située généralement entre 1 nm et 500 nm, plus particulièrement entre 1 nm et 100 nm. Les tailles données ici sont mesurées par la technique de diffusion quasi élastique de la lumière (DQEL) ou part la technique de diffraction laser. Ces particules sont en suspension stable dans une phase liquide. On entend par là que l'on n'observe pas sur ces dispersions de formation d'un gâteau de décantation avant plusieurs jours, par exemple au moins 8 jours. De plus le gâteau de décantation, s'il se forme, peut être remis en suspension par simple agitation. Les particules peuvent contenir éventuellement des ions liés ou adsorbés tels que par exemple des acétates, des nitrates, des chlorures ou des ammoniums. On notera que dans de telles dispersions, les particules peuvent se trouver soit totalement sous la forme de colloïdes, soit simultanément sous la forme d'ions ou de poly-ions et sous la forme de colloïdes.

La phase liquide est généralement dans le cas de la présente invention une phase aqueuse. Ce peut être plus particulièrement de l'eau ou un mélange eau/solvant miscible à l'eau.

On peut citer comme solvant de ce type les alcools comme le méthanol ou l'éthanol, les glycols comme l'éthylène glycol, les dérivés acétates des glycols comme le monoacétate d'éthylène glycol, les éthers de glycols, les polyols ou les cétones.

Par ailleurs et toujours dans le cadre de la présente description, on entend par terre rare les éléments du groupe constitué par l'yttrium et les éléments de la classification périodique de numéro atomique compris inclusivement entre 57 et 71. Par terre rare trivalente, on entend, sauf indication contraire, une terre rare qui ne peut se présenter que sous la forme trivalente.

On entend aussi pour la présente description par surface spécifique, la surface spécifique B.E.T. déterminée par adsorption d'azote conformément à la norme ASTM D 3663-78 établie à partir de la méthode BRUNAUER - EMMETT-TELLER décrite dans le périodique "The Journal of the American Chemical Society, 60, 309 (1938)".

Enfin, on précise que, sauf indication contraire, dans les fourchettes de valeurs qui sont données, les valeurs aux bornes sont incluses.

Pour la suite de la description on va décrire dans une première partie les caractéristiques des particules minérales colloïdales et, dans une seconde partie, celles du copolymère ampholyte.

A- Particules minérales colloïdales

La dispersion colloïdale de l'invention comprend des particules minérales de la taille qui a été donnée plus haut. Plus particulièrement, ces particules minérales sont à base d'un oxyde minéral qui peut être choisi parmi $CeO_2$, $TiO_2$, $ZrO_2$, $Al_2O_3$, $Fe_2O_3$. Les particules peuvent être aussi à base d'un hydroxyde et/ou d'un oxyhydroxyde des mêmes éléments métalliques précédents. Pour la suite de la description dans ce paragraphe A le terme « oxyde » au singulier ou au pluriel doit s'entendre comme s'appliquant non seulement à la forme oxyde mais aussi aux formes « hydroxyde » et « oxyhydroxyde ».

Les particules peuvent aussi être à base d'un mélange des oxydes mentionnés ci-dessus.

Par ailleurs les particules peuvent aussi être à base d'un mélange d'oxyde de cérium avec au moins un autre élément choisi parmi les terres rares ou l'étain ou encore d'un mélange d'oxyde de zirconium et d'une terre rare trivalente, les éléments terres rares et étain étant généralement présents sous la forme oxyde.

L'invention s'applique non seulement au cas décrit ci-dessus où les particules sont constituées d'un mélange d'oxydes mais aussi au cas où la dispersion contient des particules d'un premier type oxyde en mélange avec des particules d'un autre type d'oxyde.

En général, le copolymère ampholyte est présent à la surface des particules. On cherche d'ailleurs à recouvrir la plus grande partie de la surface de la particule par le copolymère de façon à améliorer la stabilité de la dispersion. De ce fait, la quantité de copolymère dans la dispersion sera d'autant plus grande que la surface spécifique des particules sera élevée.

Plus précisément la quantité de copolymère est telle que le rapport en masse du ou des oxydes par rapport à l'ensemble particule et copolymère est d'au moins 40%, de préférence au moins 50%, plus avantageusement au moins 80% et plus préférentiellement au moins 90%. Selon un mode de réalisation particulier, ce rapport est d'au moins 95%, plus préférentiellement au moins 99%.

Les dispersions de l'invention présentent une teneur globale en particules qui peut varier dans de larges limites et qui peut être par exemple d'au plus 45% à 50% teneur exprimée en masse d'oxyde de particule minérale par rapport à l'ensemble de la dispersion. La teneur minimale n'est pas critique et elle peut être de préférence d'au moins 0,1%.

Des modes de réalisations plus particuliers, qui portent sur des caractéristiques spécifiques des particules, vont maintenant être décrits plus précisément.

A-1-Premier mode de réalisation particulier

Selon un premier mode de réalisation, les particules présentent les caractéristiques des particules de la dispersion colloïdale décrite dans la demande de brevet WO 2006/111650. On pourra donc se référer à l'enseignement de cette demande dont les éléments principaux vont être rappelés ci-dessous.

Les particules colloïdales sont des particules d'un composé de cérium et d'au moins un autre élément M choisi parmi le zirconium, les terres rares (Ln) autres que le cérium, le titane et l'étain et ce composé est sous forme d'un oxyde mixte dans lequel le cérium et l'élément M sont en solution solide pure, le composé comprenant du cérium sous forme de cérium III dans une quantité, exprimée en rapport atomique cérium III/cérium total, comprise entre 0,005 et 0,06.

Ces particules présentent une taille qui est située généralement entre 1 nm et 100 nm, plus particulièrement entre 2 nm et 50 nm.

Une des caractéristiques spécifiques des particules dans le cas de ce premier mode de réalisation est que le composé qui les constitue est sous forme d'un oxyde mixte $(Ce,M)O_2$ dans lequel le cérium et l'élément M sont en solution solide. On entend par là qu'un des éléments, généralement l'élément M, est totalement incorporé dans le réseau cristallin de l'oxyde de l'autre élément formant matrice, par exemple le cérium. Cette incorporation peut être mise en évidence par la technique de diffraction X sur des colloïdes après lavage, notamment par ultrafiltration ou encore par ultracentrifugation et séchage à une température de 60°C. Les diagrammes RX révèlent la présence d'une structure cristalline correspondant à l'oxyde de l'élément formant matrice (oxyde de cérium généralement) et dont les paramètres de mailles sont plus ou moins décalés par rapport à un oxyde pur de ce premier élément formant matrice, ce qui démontre ainsi l'incorporation de l'autre élément dans le réseau cristallin de l'oxyde du premier. Par exemple, dans le cas d'une solution solide de l'élément M dans l'oxyde de cérium, les diagrammes RX révèlent alors une structure cristalline de type fluorine tout comme l'oxyde cérique $CeO_2$ cristallisé, et dont les paramètres de mailles sont plus ou moins décalés par rapport à un oxyde cérique pur, traduisant ainsi l'incorporation de l'élément M dans le réseau cristallin de l'oxyde de cérium.

La solution solide est pure, c'est-à-dire que pour les particules colloïdales la quantité totale d'un élément est en solution solide dans l'autre, par exemple, tout l'élément M en solution solide dans l'oxyde de cérium. Dans ce cas, les diagrammes RX ne montrent que la présence de la solution solide et ne comportent pas de raies correspondant à un oxyde de type oxyde de l'élément autre que l'élément formant matrice, par exemple un oxyde de l'élément M.

Une autre caractéristique de ce premier mode de réalisation est la présence de cérium sous forme de cérium III dans le composé constituant les particules colloïdales. La quantité de cérium III, exprimée par le rapport atomique cérium III/cérium total, est comprise entre 0,005 et 0,06. Plus particulièrement, cette quantité peut être comprise entre 0,005 et 0,05 et encore plus particulièrement entre 0,005 et 0,03.

On notera ici que le cérium III peut être présent dans le composé comme cation soit sous forme adsorbée à la surface des particules du composé de cérium, soit dans la maille cristalline du composé. Bien entendu, ces deux formes peuvent coexister.

La présence de cérium III en solution peut être mise en évidence par dosage chimique. On peut ainsi utiliser une technique d'analyse par titrage potentiométrique par oxydation du cérium III en cérium IV à l'aide du ferricyanure de potassium en milieu carbonate de potassium. La présence de cérium III en surface des particules peut être mise en évidence par la détermination du point isoélectrique des dispersions colloïdales. Cette détermination se fait d'une manière connue par la mesure de la variation du potentiel zêta des dispersions. Lorsque l'on mesure la variation de ce potentiel en faisant varier le pH d'une dispersion d'une valeur acide à une valeur basique, ce potentiel passe d'une valeur positive à une valeur négative, le passage à la valeur nulle du potentiel constituant le point isoélectrique. La présence de cérium III en surface augmente la valeur du point isoélectrique par rapport à un composé ne contenant que du cérium IV. On notera que la méthode de mesure qui vient d'être décrite s'applique à une dispersion, en l'absence du copolymère, par exemple à une dispersion de départ qui sera utilisée pour obtenir une dispersion selon l'invention dans le procédé de préparation de celle-ci, procédé qui sera décrit plus loin.

Différentes variantes de ce premier mode de réalisation, dépendant de la nature du composé de cérium et, plus précisément, de la nature de l'élément M vont maintenant être décrites plus en détail. On notera ici que les formules qui sont données ci-dessous dans la description de ces variantes correspondent à des compositions qui résultent d'analyses chimiques sur des colloïdes récupérés soit par ultracentrifugation à 50.000 T/min., 6 heures, soit encore après lavage des dispersions, ce lavage étant effectué par ultrafiltration ou par dialyse par au moins 10 volumes équivalents d'eau (1 volume de dispersion : 10 volumes d'eau).

Selon une première variante, l'élément M est le zirconium. Plus particulièrement dans le cas de cette variante, le composé peut répondre à la formule (1) $Ce_{1-x}Zr_xO_2$ dans laquelle x est inférieur à 1 et est au moins égal à 0,01, de préférence au moins égal à 0,02.

Selon une autre variante, l'élément M est une combinaison du zirconium et de l'étain. Plus particulièrement dans le cas de cette variante, le composé peut répondre à la formule (2) suivante $Ce_{1-x-y}Zr_xSn_yO_2$ dans laquelle $x + y < 1$, x vérifie la condition $0,05 \leq x \leq 0,95$ et y est au moins égal à 0,01, la valeur haute de y étant choisie de telle manière que l'on obtienne bien une solution solide. De préférence, x vérifie la condition $0,20 \leq x \leq 0,8$ et encore plus préférentiellement la condition $0,40 \leq x \leq 0,60$. De préférence aussi, y est au moins égal à 0,05 et encore plus préférentiellement y est au moins égal à 0,2. De préférence, y est au plus égal à 0,4, et encore plus préférentiellement à au plus 0,25.

Selon une troisième variante, l'élément M est une combinaison du zirconium et d'au moins une terre rare Ln, plus particulièrement une terre rare trivalente. La terre rare peut être notamment le lanthane, le gadolinium, le terbium, le praséodyme ou le néodyme. Plus particulièrement dans le cas de cette troisième variante, le composé peut répondre à la formule (3) $Ce_{1-x-y}Zr_xLnyO_2$ dans laquelle $x + y < 1$, x vérifie la condition $0,05 \leq x\leq 0,95$ et y est au moins égal à 0,01, la valeur haute de y étant choisie de telle manière que l'on obtienne bien une solution solide. De préférence, x vérifie la condition $0,20 \leq x \leq 0,8$ et encore plus préférentiellement la condition $0,40 \leq x \leq 0,60$. De préférence aussi, y est au moins égal à 0,02 et encore plus préférentiellement, y est au moins égal à 0,04. De préférence, y est au plus égal à 0,07, notamment au plus égal à 0,05, et encore plus préférentiellement à au plus 0,03. Toujours dans le cas de cette variante, l'élément M peut être une combinaison d'au moins deux terres rares dont au moins une est le praséodyme. On peut enfin noter que dans le cas où M est le terbium ou le praséodyme, éventuellement en combinaison avec une autre terre rare, ces éléments peuvent être présents à la fois sous les formes Tb III, Pr III et Tb IV et Pr IV.

Selon encore une autre variante, l'élément M est une combinaison du zirconium, de l'étain et d'au moins une terre rare Ln. Là encore, l'invention s'applique tout particulièrement bien au cas où la terre rare est une terre rare trivalente, et la terre rare peut être notamment le lanthane, le gadolinium, le terbium, le praséodyme ou le néodyme. Plus particulièrement dans le cas de cette variante, le composé peut répondre à la formule (4) $Ce_{1-x-y-z}Zr_xSn_yLn_zO_2$ dans laquelle $x +y + z < 1$, x vérifie la condition $0,05 \leq x \leq 0,95$, y est au moins égal à 0,01, z est au moins égal à 0,01. De préférence, x vérifie la condition $0,20 \leq x \leq 0,8$ et y est au moins égal à 0,10 et encore plus préférentiellement x vérifie la condition $0,40 \leq x \leq 0,60$ et y est au moins égal à 0,2. Les valeurs hautes de y et z sont choisies de telle manière que l'on obtienne bien une solution solide. De préférence, y est au plus égal à 0,4, et encore plus préférentiellement à au plus 0,25; par ailleurs, de préférence, z est au plus égal à 0,05 et encore plus préférentiellement à au plus 0,03.

Le composé de la dispersion de l'invention peut être aussi un composé dans lequel M est une terre rare ou

une combinaison de terres rares. De nouveau, l'invention s'applique tout particulièrement bien au cas où la terre rare est une terre rare trivalente. La terre rare peut être notamment le lanthane, le gadolinium, le terbium, le praséodyme ou le néodyme. Le composé peut alors répondre plus particulièrement à la formule (5) suivante $Ce_{1-x}Ln_xO_2$ dans laquelle x est au plus égal à 0,15 et est au moins égal à 0,01, de préférence au moins égal à 0,02 et encore plus préférentiellement au moins égale à 0,04. De préférence x est à au plus égal à 0,10 et encore plus préférentiellement à au plus 0,05. La terre rare peut être présente, au moins en partie, sous forme Ln III et, là aussi, soit dans la maille cristalline soit sous forme adsorbée à la surface des particules du composé de cérium. Dans le cas du praséodyme, ce dernier élément peut être présent à la fois sous les formes Pr III et Pr IV et, dans ce même cas, x est plus particulièrement au moins égal à 0,04 et encore plus particulièrement compris entre 0,03 et 0,08.

Selon encore une autre variante de l'invention, le composé est un oxyde mixte de formule (6) $Ce_{1-x}Ti_xO_2$ dans laquelle x est au plus égal à 0,6 et est au moins égal à 0,01, de préférence au moins égal à 0,05 et encore plus préférentiellement au moins égal à 0,2. De préférence, x est égal à au plus 0,5.

Les particules qui constituent le composé de la dispersion présentent une granulométrie fine et resserrée. En effet, elles ont une taille, mesurée par leur diamètre moyen, qui est de préférence d'au plus 10 nm et qui peut être plus particulièrement comprise 2 et 8 nm. Cette taille est déterminée par microscopie électronique à transmission (MET), de manière classique, sur un échantillon préalablement séché sur une membrane de carbone supportée sur grille de cuivre et sur une moyenne de 50 mesures.

Ces particules sont en outre bien individualisées. On peut utiliser la technique de cryo-MET pour déterminer l'état d'agrégation des particules. Elle permet d'observer par microscopie électronique à transmission des échantillons maintenus congelés dans leur milieu naturel qui peut être de l'eau par exemple.

Dans le cas de ce mode de réalisation, la phase liquide de la dispersion est plus particulièrement l'eau.

Un second mode de réalisation particulier va maintenant être décrit.

A-2- Second mode de réalisation particulier

Selon ce mode, les particules minérales de la dispersion sont des particules d'oxyde de cérium, ces particules (particules secondaires) présentant une taille moyenne d'au plus 200 nm, ces particules secondaires étant constituées de particules primaires dont les tailles présentent une valeur moyenne d'au plus 100 nm avec un écart type dont la valeur est d'au plus 30% de ladite taille moyenne.

Les particules qui constituent la dispersion selon ce second mode de réalisation et qui présentent une taille moyenne d'au plus 200 nm sont appelées dans la suite de la description relative à ce second mode « particules secondaires ». Ces particules sont des agrégats d'autres particules plus fines, agrégées, appelées par la suite « particules primaires ».

Selon une caractéristique avantageuse, ces particules primaires sont fines et monodisperses. Elles présentent en effet une taille moyenne d'au plus 100 nm avec un écart type dont la valeur est d'au plus 30%, plus particulièrement d'au plus 20% de ladite taille moyenne.

La valeur moyenne de la taille des particules primaires est déterminée par la technique de diffraction des rayons X (DRX). La valeur mesurée en DRX correspond à la taille du domaine cohérent calculé à partir de la largeur des deux raies de diffraction les plus intenses et en utilisant le modèle de Scherrer. Cette valeur peut aussi être déterminée par la mesure de la surface BET.

L'écart type mentionné ici a le sens habituel mathématique, il s'agit de la racine carrée de la variance et il s'exprime par la formule :

$$\sigma = \sqrt{\frac{1}{n}\sum_{i=1}^{n}(x_i - \overline{x})^2}$$

n étant le nombre de particules pris en compte dans la mesure,
$x_i$ étant la taille d'une particule i,
$\overline{x}$ étant la valeur moyenne de la taille des particules ($1/n\sum_i x_i$).

La mesure de la taille des n différentes particules est faite à partir d'un cliché obtenu par microscopie électronique à transmission (MET).

Cet écart type peut être plus particulièrement d'au plus 15% et encore plus particulièrement d'au plus 10% de la valeur de la taille moyenne.

Les particules primaires peuvent plus particulièrement avoir des tailles qui présentent une valeur moyenne d'au plus 80 nm, encore plus particulièrement d'au plus 60 nm.

Ces tailles moyennes de particules primaires peuvent être par ailleurs d'au moins 10 nm, notamment d'au moins 20 nm et plus particulièrement d'au moins 30 nm. Selon des variantes particulières, ces tailles moyennes peuvent ainsi être comprises entre 10 nm et 100 nm, 20 nm et 80 nm et 30 nm et 60 nm.

Comme indiqué plus haut, ces particules primaires forment des agrégats qui constituent ainsi les particules secondaires. Ces particules secondaires peuvent avoir plus particulièrement une taille moyenne d'au plus 150 nm, plus particulièrement d'au plus 100 nm.

Par ailleurs, selon une autre caractéristique avantageuse de ce mode de réalisation, ces particules secondaires sont elles aussi monodisperses. Elles peuvent présenter en effet un indice de dispersion d'au plus 0,5. Cet indice peut être plus particulièrement d'au plus 0,4 et encore plus particulièrement d'au plus 0,3.

Pour l'ensemble de la description de ce mode de réalisation et en ce qui concerne les particules secondaires, la taille moyenne et l'indice de dispersion sont les valeurs obtenues en mettant en oeuvre la technique de diffraction laser en utilisant un granulomètre laser (répartition en masse).

On entend par indice de dispersion le rapport :

$$\sigma/m = (d_{90}-d_{10})/2d_{50}$$

dans lequel :

- $d_{90}$ est la taille ou diamètre des particules pour lequel 90% des particules ont un diamètre inférieur à $d_{90}$;
- $d_{10}$ est la taille ou diamètre des particules pour lequel 10% des particules ont un diamètre inférieur à $d_{10}$;
- $d_{50}$ est la taille ou diamètre moyen des particules.

La phase liquide des dispersions selon ce second mode de réalisation peut être l'eau.

Ce peut être aussi un mélange eau/solvant miscible à l'eau. On peut citer comme exemple de solvant de ce type, les alcools comme le méthanol ou l'éthanol, les glycols comme l'éthylène glycol, les dérivés alkyles ou acétates des glycols comme le monoacétate d'éthylène glycol ou les polyols.

Des procédés de préparation de la dispersion selon ce second mode de réalisation vont maintenant être décrits.

La dispersion peut être préparée par un premier procédé qui comprend les étapes suivantes :

- (a) on prépare une solution d'un sel de cérium III qui comprend en outre du cérium IV;
- (b) on met en contact sous atmosphère inerte cette solution avec une base ce par quoi on obtient un précipité;
- (c) on soumet le milieu obtenu à l'étape précédente à un traitement thermique sous atmosphère inerte, au moins une des étapes (a), (b) ou (c) étant conduite en présence d'ions nitrates;
- (d) on effectue successivement mais dans un ordre quelconque une acidification et un lavage du milieu ainsi obtenu ce par quoi on obtient la dispersion.

La première étape (a) du procédé ci-dessus consiste donc à préparer une solution de départ qui est une solution d'un sel de cérium III.

Comme sels de cérium III, on peut utiliser plus particulièrement le nitrate, le chlorure, le sulfate ou le carbonate de cérium III ainsi que des mélanges de ces sels comme des mixtes nitrate/chlorure.

D'une manière connue cette solution de départ doit présenter l'acidité convenable pour que le cérium soit bien entièrement présent en solution.

La solution de départ comprend en outre du cérium IV. Le cérium IV est apporté par un sel. Ce peut être par exemple le nitrate de cérium IV.

Généralement, la quantité de cérium IV est telle que le rapport molaire (CeIV/CeIII) dans la solution de départ soit compris entre 1/5000 et 1/50.

La solution de départ préparée à l'étape (a) peut être préalablement dégazée par bullage d'un gaz inerte. Par « gaz inerte » ou « atmosphère inerte », on entend pour la présente description une atmosphère ou un gaz exempt d'oxygène, le gaz pouvant être par exemple de l'azote ou de l'argon.

La seconde étape (b) du procédé consiste à faire réagir la solution de départ avec une base.

Comme base, on peut utiliser notamment les produits du type hydroxyde. On peut citer les hydroxydes d'alcalins ou d'alcalino-terreux et l'ammoniaque. On peut aussi utiliser les amines secondaires, tertiaires ou quaternaires. Toutefois, les amines et l'ammoniaque peuvent être préférés dans la mesure où ils diminuent les risques de pollution par les cations alcalins ou alcalino terreux.

La base peut aussi être préalablement dégazée par bullage d'un gaz inerte.

Pour conduire la réaction de la seconde étape du procédé, la mise en contact peut se faire dans un ordre quelconque d'introduction des réactifs. Toutefois, il est préférable d'introduire la solution de départ dans un milieu contenant la base.

Cette seconde étape doit être conduite sous atmosphère inerte, soit dans un réacteur fermé soit dans un réacteur semi-fermé avec balayage par le gaz inerte. La mise en contact se fait généralement dans un réacteur agité.

Enfin, cette seconde étape est généralement effectuée à température ambiante (20°C-25°C) ou à une température d'au plus 50°C.

La troisième étape (c) du procédé est un traitement thermique du milieu réactionnel obtenu à l'issue de l'étape précédente.

Ce traitement consiste à chauffer le milieu et à le maintenir à une température qui est généralement d'au plus 95°C et plus particulièrement comprise entre 60°C et 95°C.

La durée de ce traitement peut être comprise entre quelques minutes et quelques heures.

Ce traitement est effectué aussi sous atmosphère inerte, ce qui a été décrit au sujet de cette atmosphère pour la seconde étape s'appliquant de même ici.

Selon une caractéristique du procédé, au moins une des étapes (a), (b) ou (c) doit être conduite en présence d'ions nitrates. Généralement, les ions nitrates sont apportés par addition d'acide nitrique, plus particulièrement à l'étape (a), lors de la préparation de la solution de cérium III.

La quantité d'ions nitrates, exprimée par le rapport molaire $NO_3^-/Ce^{3+}$ est généralement comprise entre 1/3 et 5.

La dernière étape du procédé, étape (d), comprend en fait deux opérations successives qui peuvent être effectuées dans un ordre quelconque. Ces opérations sont d'une part une acidification et d'autre part un lavage.

On va décrire ci-dessous plus précisément ces opérations dans le cas d'un enchaînement acidification puis lavage.

L'acidification a lieu généralement après refroidissement du milieu obtenu à l'issue de l'étape (c) par addition d'un acide.

On peut utiliser tout acide minéral ou organique. On utilise plus particulièrement l'acide nitrique.

La quantité d'acide ajoutée est telle que le pH du milieu après acidification soit compris entre 2 et 5.

Cette opération peut être conduite à l'air, il n'est plus nécessaire d'opérer sous atmosphère inerte à ce stade du procédé.

L'acidification est suivie d'un lavage qui a pour but d'éliminer de la dispersion les espèces solubles, essentiellement des sels.

Le lavage peut se faire de différentes manières avec ou sans séparation solide/liquide.

On peut ainsi l'effectuer en séparant les particules solides de la phase liquide par exemple par filtration frontale, décantation ou centrifugation. Le solide obtenu est remis ensuite en dispersion dans une phase aqueuse. On peut aussi procéder par filtration tangentielle.

Ce lavage peut être éventuellement renouvelé si nécessaire par exemple jusqu'à l'obtention d'une conductivité donnée de la dispersion, la conductivité mesurant le taux d'impuretés présentes dans cette dispersion.

Comme indiqué plus haut, l'ordre des opérations peut être inversé par rapport à ce qui vient d'être décrit. Ainsi, à l'issue de l'étape (c) et, là aussi, généralement après refroidissement du milieu obtenu, on peut alors procéder à un lavage de la manière décrite ci-dessus. A l'issue du lavage, on effectue ensuite l'acidification du milieu obtenu.

On obtient à l'issue de l'étape (d) une dispersion selon le second mode de réalisation.

Dans le cas d'une dispersion en milieu solvant miscible à l'eau, cette dispersion peut être préparée d'une manière connue en soi à partir d'une dispersion aqueuse telle qu'obtenue par le procédé qui vient d'être décrit et par mise en contact avec le solvant.

La mise en contact peut se faire à température ambiante par exemple environ 20°C, mais aussi à une température plus élevée, par exemple dans un intervalle allant de 60°C à 150°C.

Un second procédé va maintenant être décrit.

Ce second procédé diffère du premier uniquement par la première étape.

Cette première étape consiste à préparer une solution d'un sel de cérium III qui comprend en outre de l'eau oxygénée.

Ce qui a été décrit plus haut sur la nature du sel de cérium III s'applique de même ici.

La quantité de solution de $H_2O_2$ est telle que le rapport molaire ($H_2O_2$/CeIII dans la solution de sel de cérium soit compris entre 1/10000 et 1/100.

La suite de ce second procédé se déroule comme décrit plus haut pour le premier procédé c'est-à-dire que l'on met en contact sous atmosphère inerte avec une base la solution de la première étape, on effectue un traitement thermique sous atmosphère inerte et on acidifie et lave le milieu ainsi obtenu (étapes (b), (c) et (d) telles que décrites plus haut avec présence d'ions nitrates à au moins une des étapes (a) (b) et (c)). Ce qui a été décrit précédemment pour l'ensemble de ces étapes ultérieures et pour le premier procédé s'applique donc de même ici pour le second procédé.

Le copolymère ampholyte va maintenant être décrit.

B- Copolymère ampholyte

La dispersion de l'invention est caractérisée par le fait qu'elle comprend en outre un copolymère ampholyte qui joue le rôle de stabilisant. Ce copolymère va maintenant être décrit plus précisément. Des définitions vont être données ci-dessous.

B-1- Définitions

Dans la présente demande, on désigne par «unité dérivant d'un monomère» une unité qui peut être obtenue directement à partir dudit monomère par polymérisation. Ainsi, par exemple, une unité dérivant d'un ester d'acide acrylique ou méthacrylique ne couvre pas une unité de formule - $CH_2$-CH(COOH)-, ou -$CH_2$-C($CH_3$)(COOH)-, obtenue par exemple en polymérisant un ester d'acide acrylique ou méthacrylique, puis en hydrolysant. Ainsi, la terminologie « unité dérivant d'un monomère » n'est relative qu'à la constitution finale du polymère et est indépendante du procédé de polymérisation utilisé pour synthétiser le polymère.

Dans la présente demande, le terme «hydrophobe», pour un monomère, est utilisé dans son sens usuel de «qui n'a pas d'affinité pour l'eau»; cela signifie que le monomère peut former une solution macroscopique diphasique dans de l'eau distillée à 25°C, à une concentration supérieure ou égale à 1% en poids, ou qu'il a été catégorisé comme hydrophobe dans la présente demande.

Dans la présente demande, le terme «hydrophile», pour un monomère, est également utilisé dans son sens usuel de «qui a de l'affinité pour l'eau», c'est-à-dire n'est pas susceptible de former une solution macroscopique diphasique dans de l'eau distillée à 25°C à une concentration supérieure ou égale à 1% en poids, ou qu'il a été catégorisé comme hydrophile dans la présente demande.

Par « unités anioniques ou potentiellement anioniques », on entend des unités qui comprennent un groupe anionique ou potentiellement anionique et/ou qui ont été catégorisées comme telles. Les unités ou groupes anioniques sont des unités ou groupes qui présentent au moins une charge négative (généralement associée à un ou plusieurs cations comme des cations de composés alcalins ou alcalino-terreux, par exemple le sodium, ou à un ou plusieurs composés cationiques comme l'ammonium), quel que soit le pH du milieu où est présent le copolymère. Les unités ou groupes potentiellement anioniques sont des unités ou groupes qui peuvent être neutres ou présenter au moins une charge négative selon le pH du milieu où est présent le copolymère. Dans ce cas on parlera d'unités potentiellement anioniques sous forme neutre ou sous forme anionique. Par extension on peut parler d'unités ou de monomères anioniques ou potentiellement anioniques. Des groupes considérés comme anioniques sont typiquement des groupes acides forts, par exemple de pKa inférieur ou égal à 2. Des groupes considérés comme potentiellement anioniques sont typiquement des groupes acides faibles, par exemple de pKa supérieur à 2.

Par « unités cationiques », on entend des unités qui comprennent un groupe cationique et/ou qui ont été catégorisées comme telles. Les unités ou groupes cationiques sont des unités ou groupes qui présentent au moins une charge positive (généralement associée à un ou plusieurs anions comme l'ion chlorure, l'ion bromure, un groupe sulfate, un groupe méthylsulfate), quel que soit le pH du milieu dans lequel le copolymère est introduit. Par extension on peut parler de monomères cationiques.

Par « unités neutres », on entend des unités qui ne présentent pas de charge, quel que soit le pH du milieu où est présent le copolymère.

Dans la présente demande, le rapport en poids entre des blocs correspond au rapport entre les masses des monomères (ou mélanges de monomères) utilisés pour la préparation des blocs (en tenant compte des variations de masses liées à une éventuelle modification subséquente). Les proportions en poids des blocs sont les proportions par rapport au copolymère à blocs total, et correspondent aux proportions en poids des monomères (ou mélanges de monomères) utilisés pour la préparation des blocs, par rapport à la totalité des monomères utilisés pour préparer le copolymère à blocs (en tenant compte des variations de masses liées à une éventuelle modification subséquente).

Dans la présente demande, on entend par « agent de transfert », un agent susceptible d'induire une polymérisation radicalaire contrôlée en présence de monomères insaturés et éventuellement d'une source de radicaux libres.

Dans la présente demande une "composition de monomères" mise en oeuvre lors d'une étape de polymérisation, est définie par la nature et la quantité relative de monomères. Il peut s'agir d'un unique monomère. Il peut s'agir d'une association de plusieurs monomères (comonomères), de natures différentes, dans des proportions données. De même, « une composition d'une chaîne macromoléculaire ou une composition d'unités » d'une chaîne macromoléculaire, est définie par la nature et la quantité relative des monomères dont dérivent les unités de la chaîne macromoléculaire. Il peut s'agir d'une chaîne macromoléculaire dérivant d'un unique monomère (chaîne homopolymérique). Il peut s'agir d'une chaîne macromoléculaire dont les unités dérivent de plusieurs monomères de natures différentes, dans des proportions données (chaîne copolymérique).

Dans la présente demande une « composition différente de monomères » désigne une composition dont la nature du ou des monomères et/ou dont leurs proportions en différents monomères sont différentes. Il en est de même par analogie pour une chaîne macromoléculaire différente ou une composition d'unités différente. Une composition de monomères comprenant 100% d'un monomère $M^1$ est différente d'une composition comprenant 100% d'un monomère $M^2$. Une composition de monomères comprenant 50% d'un monomère $M^1$ et 50% d'un monomère $A^1$ est différente d'une composition comprenant 10% du monomère $M^1$ et 90% du monomère $A^1$. Une composition de monomères comprenant 50% d'un monomère $M^1$ et 50% d'un monomère $A^1$ est différente d'une composition comprenant 50% du monomère $M^1$ et 50% d'un monomère $A^2$.

Dans la présente demande, pour simplifier, on assimile parfois les unités dérivant d'un monomère au monomère lui-même, et réciproquement.

Dans la présente demande, un monomère « éthyléniquement insaturé », est un composé comprenant une double liaison carbone-carbone, polymérisable. Il peut s'agir d'un monomère mono-éthyléniquement insaturé, de préférence alpha-mono-éthyléniquement insaturé, ou d'un monomère multi-éthyléniquement insaturé. Dans la présente demande, pour les composés différents des copolymères étoiles, et pour des procédés différents de procédé de préparations de copolymères étoiles, un monomère éthyléniquement insaturé désigne un monomère mono-éthyléniquement insaturé, de préférence alpha-mono-éthyléniquement.

B-2- Description du copolymère ampholyte

Le copolymère ampholyte comprend:

- au moins une chaine macromoléculaire B comprenant des unités $B_C$ cationiques, dérivant de monomères $B_C$ cationiques, et
- une partie A liée à une unique extrémité d'au moins une chaine macromoléculaire B, cette partie étant un groupement polymérique ou non polymérique comprenant au moins un groupe anionique ou potentiellement anionique.

On note que le copolymère ampholyte peut comprendre plusieurs parties B, mais qu'il ne comprend avantageusement qu'un seule partie A. La chaine macromoléculaire B du copolymère ampholyte peut comprendre de 1 à 100%, en poids, d'unités $B_C$, de préférence de 50% à 100%.

Selon un troisième mode de réalisation de l'invention, la partie A est un groupement non polymérique. Dans ce troisième mode de réalisation la partie A peut en particulier être une unité dans bout de chaine (en bout de chaine macromoléculaire B) comprenant un groupe anionique ou potentiellement anionique. Dans ce mode de réalisation, on peut se référer au copolymère ampholyte comme un "télomère" ampholyte. Les structures télomériques sont connues de l'homme du métier; quelques unes, ainsi que des modes de préparation sont détaillés plus bas. Le copolymère peut ainsi être un télomère de structure A-B, où A est une unité de bout de chaine comprenant au moins un groupe anionique ou potentiellement anionique.

Selon un quatrième mode de réalisation de l'invention, préféré, la partie A est un groupement polymérique, il peut s'agir d'une chaine macromoléculaire A, de préférence linéaire (par opposition à une chaine branchée et/ou en forme d'étoile et/ou réticulée), comprenant des unités $A_A$ anioniques ou potentiellement anioniques, dérivant de monomères $A_A$ anioniques ou potentiellement anioniques. Les chaines macromoléculaires A et B peuvent être liées entre elles par une liaison carbone-carbone, ou par un autre type de liaison.

Selon une première variante de ce quatrième mode de réalisation, le copolymère présente une pluralité, de préférence au moins 3, de chaines macromoléculaires B, liées à la chaine macromoléculaire A, unique, liée en des points de branchements qui ne sont pas situés en bout de chaine macromoléculaire A. Dans cette première variante le copolymère ampholyte peut en particulier être un copolymère peigne (squelette A)-(chaines latérales B), la partie A constituant le squelette A et le copolymère comprenant une pluralité de chaines macromoléculaires B liées chacune au squelette A à une de leurs extrémités.

Selon une deuxième variante de ce quatrième mode de réalisation, particulièrement préférée, le copolymère présente une ou deux chaines macromoléculaires B, liées à la chaine macromoléculaire A à une ou deux des extrémités de celle-ci. Dans cette deuxième variante, la chaine macromoléculaire B peut être assimilée à un "bloc B" et la chaine macromoléculaire A peut être assimilée à un "bloc A". Toujours dans cette variante on peut se référer au copolymère ampholyte comme un "copolymère à blocs" ampholyte. De préférence, pour cette variante, les chaines macromoléculaires A et B sont liées entre elles par une liaison carbone-carbone.

Le copolymère ampholyte peut en particulier être choisi parmi les copolymères suivants:

- copolymère dibloc (bloc A)-(bloc B), la partie A constituant le bloc A et la chaine macromoléculaire B constituant le bloc B,
- copolymère tribloc (bloc B)-(bloc A)-(bloc B), la partie A constituant le bloc A et la chaine macromoléculaire B

constituant le bloc B.

Selon la deuxième variante du quatrième mode de réalisation le copolymère est un copolymère dibloc ou tribloc linéaire dont le bloc A et/ou le bloc B, de préférence les deux, dérive de monomères éthylèniquement insaturés, de préférence de monomères mono-alpha-éthylèniquement insaturés et/ou de type di-allylique cyclopolymérisable, comme le chlorure de N,N-diméthyldiallylammonium (DADMAC).

Le groupe anionique ou potentiellement anionique peut notamment comprendre, le cas échéant sous forme acide, un groupe choisi parmi les groupes suivants:

- le groupe carboxylate $-COO^-$
- le groupe sulfonate $-SO_3^-$
- le groupe sulfate $-SO_4^-$
- le groupe phosphonate $-PO_3^{2-}$
- le groupe phosphate $-PO_4^{2-}$.

Si le groupe est sous forme acide, il est associé à au moins un ou plusieurs protons. Le groupe peut être associé à un contre ion (un cation) différent d'un proton. Il peut notamment s'agir d'un cation d'un métal alcalin ou alcalino-terreux, en particulier l'ion sodium ou potassium, ou d'un cation organique par exemple un ion ammonium. On note que les groupes cationiques de la partie B peuvent constituer tout ou partie des contre ions associés au groupe anionique ou potentiellement anionique. On mentionne que les groupes anioniques ou potentiellement anioniques ne sont pas des groupes zwitterioniques comprenant à la fois un groupe cationique et un groupe anionique ou potentiellement anionique (ils seraient alors de charge globalement nulle).

Les unités $B_C$ sont les unités cationiques. Elles comprenent des groupes cationiques. Dans la présente demande, les groupes cationiques ne couvrent pas des groupes potentiellement cationiques, de type bases faibles, susceptibles de devenir cationiques par adjonction d'un proton comme des amines primaires, ou secondaires, ou même comme des groupes amides. Les groupes cationiques peuvent notamment être des groupes de type:

- ammonium quaternaire (de formule $-N^+R_3$ où R, identique ou différent, est un groupe différent de l'atome d'hydrogène, par exemple un groupe hydrocarboné, éventuellement substitué, le cas échéant interrompu par des hétéroatomes, par exemple un groupe alkyle linéaire ou branché en $C_1$-$C_{22}$, par exemple un groupe méthyle),
- inium (de formule $=N^+R_2$ où R, identique ou différent, est un groupe différent de l'atome d'hydrogène, dont l'un fait le cas échéant partie d'un cycle relié à la double liaison, ledit cycle étant le cas échéant aromatique, au moins un des groupes R pouvant être par exemple un groupe hydrocarboné, éventuellement substitué, le cas échéant interrompu par des hétéroatomes, par exemple un groupe alkyle linéaire ou branché en $C_1$-$C_{22}$, par exemple un groupe méthyle).

Dans le cas des groupes de type ammonium quaternaire il peut notamment s'agir d'un groupe triméthylammonium.

Dans le cas des groupes inium, il peut notamment s'agir d'un groupe pyridinium, de préférence d'un groupe alkylpyridinium, de préférence d'un groupe méthylpyridinium.

Le groupe cationique peut être associé à un contre ion (un anion). Il peut notamment s'agir d'un ion chlorure, bromure, iodure, nitrate, méthylsufate ou éthylsulfate. On note que les groupes anioniques ou potentiellement anioniques de la partie A peuvent constituer tout ou partie des contre ions associés au groupe cationique. On mentionne que les unités cationiques ne sont pas des unités zwitterioniques comprenant à la fois un groupe cationique et un groupe anionique ou potentiellement anionique (ils seraient alors de charge globalement nulle). En d'autres termes, les groupes R mentionnés ci-dessous ne comprennent pas de substituant anionique.

A titre d'exemples de monomères $B_C$ dont peuvent dériver les unités $B_C$, on peut mentionner:

- le chlorure de triméthylammoniumpropylméthacrylate,
- le chlorure ou le bromure de triméthylammoniuméthylacrylamide ou méthacrylamide,
- le méthylsulfate de triméthylammoniumbutylacrylamide ou méthacrylamide,
- le méthylsulfate de triméthylammoniumpropylméthacrylamide (MAPTA MeS),
- le chlorure de (3-méthacrylamidopropyl)triméthylammonium (MAPTAC),
- le chlorure de (3-acrylamidopropyl)triméthylammonium (APTAC),
- le chlorure ou le méthylsulfate de méthacryloyloxyéthyl triméthylammonium,
- les sels d'acryloyloxyéthyl triméthylammonium (ADAMQUAT),
- le bromure, chlorure ou méthylsulfate de 1-éthyl 2-vinylpyridinium, de 1-éthyl 4-vinylpyridinium ;
- le chlorure de N,N-diméthyldiallylammonium (DADMAC) ;

- le chlorure de diméthylaminopropylméthacrylamide,N-(3-chloro-2-hydroxypropyl) triméthylammonium (DIQUAT) ;
- le monomère de formule

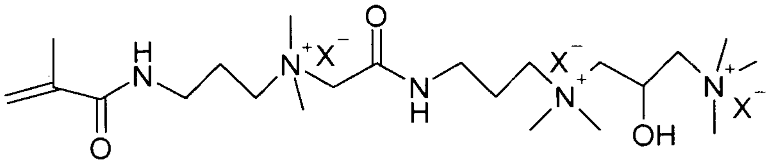

où $X^-$ est un anion, de préférence chlorure ou méthylsulfate,
- leurs mélanges ou associations.

Les unités $B_C$ peuvent notamment être obtenues par polymérisation, afin de former au moins une chaine macromoléculaire B, de monomères comprenant les monomères $B_C$ (le cas échéant en mélange avec d'autres monomères). Elles peuvent être obtenues également par polymérisation, afin de former au moins une chaine macromoléculaire précurseur $B_{précurseur}$, de monomères comprenant des monomères précurseurs d'unités $B_C$ (le cas échéant en mélange avec d'autres monomères), conduisant à des unités précurseurs des unités $B_C$, puis modification chimique des unités précurseurs afin d'obtenir les unités $B_C$ dans une chaine macromoléculaire B. De telles modifications sont connues. Il peut par exemple s'agir de quaternisations, par exemple à l'aide de diméthyle sulfate ou d'halogenoalkylammonium quaternaires ou d'halogenoalkylhydroxyalkylammonium quaternaires.

La chaine macromoléculaire B peut comprendre des unités $B_{autres}$, différentes des unités $B_c$, ne comprenant pas de groupe cationique, dérivant de monomères $B_{autre,}$ différent des monomères Bc, ne comprenant pas de groupe cationique. Il peut notamment s'agir:

- d'unités $N_{phile}$, neutres hydrophiles, dérivant de monomères $N_{phile}$ neutres hydrophiles,
- d'unités $N_{phobe}$, neutres hydrophobes, dérivant de monomères $N_{phobe}$ neutres hydrophobes.

A titre d'exemples de monomères $N_{phile}$ dont peuvent dérivant des unités $N_{phile}$, on peut mentionner:

- les hydroxyalkylesters d'acides α-β éthyléniquement insaturés comme les acrylates et méthacrylates d'hydroxyéthyle, d'hydroxypropyle, le glycérol monométhacrylate...
- les amides α-β éthyléniquement insaturés comme l'acrylamide, le méthacrylamide, le N,N-diméthyl méthacrylamide, le N-méthylolacrylamide ...
- les monomères α-β éthyléniquement insaturés portant un segment polyoxyalkyléné hydrosoluble du type polyoxyde d'éthylène, comme les polyoxyde d'éthylène α-méthacrylates (BISOMER S20W, S10W, ... de LAPORTE) ou α,ω-diméthacrylates, le SIPOMER BEM de RHODIA (méthacrylate de polyoxyéthylène ω-béhényle), le SIPOMER SEM-25 de RHODIA (méthacrylate de polyoxyéthylène ω-tristyrylphényle) ...
- l'alcool vinylique,
- les monomères α-β éthyléniquement insaturés précurseurs d'unités ou de segments hydrophiles tels que l'acétate de vinyle qui, une fois polymérisés, peuvent être hydrolysés pour engendrer des unités alcool vinylique ou des segments alcool polyvinylique,
- les vinyllactames, comme les vinylpyrrolidones, ou le N-vinylcaprolactame,
- les monomères α-β éthyléniquement insaturés de type uréido et en particulier le méthacrylamido de 2-imidazolidinone éthyle (Sipomer WAM II de RHODIA),
- le nonéthyleneglycolméthyletheracrylate ou le nonéthyleneglycolméthyletherméthacrylate,
- leurs mélanges ou associations.

A titre d'exemples de monomères $N_{phobe}$ dont peuvent dérivant des unités $N_{phobe}$, on peut mentionner:

- les monomères vinylaromatiques tels que styrène, alpha-méthylstyrène, vinyltoluène...
- les halogénures de vinyle ou de vinylidène, comme le chlorure de vinyle, chlorure de vinylidène, les halogénures de vinyle aromatiques comme le pentafluorure styrène
- les $C_1$-$C_{12}$ alkylesters d'acides α-β monoéthyléniquement insaturés tels que les acrylates et méthacrylates de méthyle, éthyle, butyle, acrylate de 2-éthylhexyle ...
- les esters de vinyle ou d'allyle d'acides carboxyliques saturés tels que les acétates, propionates, versatates, stéarates ... de vinyle ou d'allyle
- les nitriles α-β monoéthyléniquement insaturés contenant de 3 à 12 atomes de carbone, comme l'acrylonitrile, le

méthacrylonitrile ...

- les α-oléfines comme l'éthylène ...
- les diènes conjugués, comme le butadiène, l'isoprène, le chloroprène,
- les monomères susceptibles de générer des chaînes polydiméthylsiloxane (PDMS). Ainsi la partie B peut être un silicone, par exemple une chaîne polydiméthylsiloxane ou un copolymère comprenant des unités diméthylsiloxy,
- le diéthyleneglycoléthyletheracrylate ou le diéthyleneglycoléthylethérméthacrylate
- leurs mélanges ou associations.

La chaîne macromoléculaire A du deuxième mode de réalisation comprend des unités $A_A$ anioniques ou potentiellement anioniques, dérivant de monomères $A_A$.

A titre d'exemples de monomères $A_A$ dont peuvent dériver les unités $A_A$, on peut mentionner:

- des monomères possédant au moins une fonction carboxylique, comme les acides carboxyliques α-β éthyléniquement insaturés ou les anhydrides correspondants, tels que les acides ou anhydrides acrylique, méthacrylique, maléique, l'acide fumarique, l'acide itaconique, le N-méthacroyl alanine, le N-acryloylglycine, le paracarboxystyrène, et leurs sels hydrosolubles
- des monomères précurseurs de fonctions carboxylates, comme l'acrylate de tertiobutyle, qui engendrent, après polymérisation, des fonctions carboxyliques par hydrolyse,
- des monomères possédant au moins une fonction sulfate ou sulfonate, comme le 2-sulfooxyéthyl méthacrylate, l'acide vinylbenzène sulfonique, l'acide allyl sulfonique, le 2-acrylamido-2méthylpropane sulfonique, l'acrylate ou le méthacrylate de sulfoéthyle , l'acrylate ou le méthacrylate de sulfopropyle et leurs sels hydrosolubles
- des monomères possédant au moins une fonction phosphonate ou phosphate, comme l'acide vinylphosphonique,... les esters de phosphates éthyléniquement insaturés tels que les phosphates dérivés du méthacrylate d'hydroxyéthyle (Empicryl 6835 de RHODIA) et ceux dérivés des méthacrylates de polyoxyalkylènes et leurs sels hydrosolubles,
- leurs mélanges ou associations.

A titre d'exemples de monomères comprenant une fonction phosphate ou phosphonate, on cite notamment:

- les dérivés d'esters d'acide N-méthacrylamidométhylphosphonique, en particulier l'ester n-propylique (RN 31857-11-1), l'ester méthylique (RN 31857-12-2), l'ester éthylique (RN 31857-13-3), l'ester n-butylique (RN 31857-14-4), l'ester isopropylique (RN 51239-00-0), ainsi que leurs dérivés monoacide et diacide phosphonique, tel le diacide N-méthacrylamidométhylphosphonique (RN 109421-20-7),
- les dérivés d'esters d'acide N-méthacrylamidoéthylphosphonique, tel le diméthyl ester de l'acide N-méthacrylamidoéthylphosphonique (RN 266356-40-5), le di(2-butyl-3,3-diméthyl) ester de l'acide N-méthacrylamidoéthyl phosphonique (RN 266356-45-0), ainsi que leurs dérivés monoacide et diacide phosphonique, tel le diacide N-méthacrylamidoéthylphosphonique (RN 80730-17-2),
- les dérivés d'esters d'acide N-acrylamidométhylphosphonique tels le diméthyl ester de l'acide N-acrylamidométhyl phosphonique (RN 24610-95-5), le diéthyl ester de l'acide N-acrylamidométhyl phosphonique (RN 24610-96-6), le bis(2-chloropropyl) N-acrylamidométhyl phosphonate (RN 50283-36-8), ainsi que leurs dérivés monoacide et diacide phosphonique tel l'acide N-acrylamidométhyl phosphonique (RN 151752-38-4),
- les dérivés de dialkyl ester d'acide vinylbenzylphosphonique, en particulier les dérivés di(n-propyl) (RN 60181-26-2), di(isopropyl) (RN 159358-34-6), diéthyl (RN 726-61-4), diméthyl (RN 266356-24-5), di(2-butyl-3,3-diméthyl) (RN 266356-29-0) et di (t-butyl) ester (RN 159358-33-5), ainsi que leurs variantes monoacide et diacide phosphonique, tel le diacide vinylbenzylphosphonique (RN 53459-43-1), le diéthyl 2-(4-vinylphenyl)éthanephosphonate (RN 61737-88-0),
- les dérivés dialkylphosphonoalkyl acrylates et méthacrylates, tel le diméthyl ester de l'acide 2-(acryloyloxy)éthylphosphonique (RN 54731-78-1) et le diméthyl ester de l'acide 2-(méthacryloyloxy)éthylphosphonique (RN 22432-83-3), le diéthyl ester de l'acide 2-(méthacryloyloxy)méthylphosphonique (RN 60161-88-8), le diméthyl ester de l'acide2-(méthacryloyloxy)méthylphosphonique (RN 63411-25-6), le diméthyl ester de l'acide 2-(méthacryloyloxy)propylphosphonique (RN 252210-28-9), le diisopropyl ester de l'acide 2-(acryloyloxy)méthylphosphonique (RN 51238-98-3), le 2-(acryloyloxy) éthylphosphonique acide diéthyl ester (RN 20903-86-0), ainsi que leurs variantes monoacide et diacide phosphonique, tel l'acide 2-(méthacryloyloxy)éthylphosphonique (RN 80730-17-2), l'acide 2-(méthacryloyloxy)méthylphosphonique (RN 87243-97-8), l'acide 2-(méthacryloyloxy)propylphosphonique (RN 252210-30-3), l'acide 2-(acryloyloxy)propylphosphonique (RN 254103-47-4) et l'acide 2-(acryloyloxy)éthylphosphonique
- l'acide vinyl phosphonique, éventuellement substitué par des groupements cyano, phényle, ester ou acétate, l'acide vinylidene phosphonique, sous forme de sel de sodium ou son ester isopropylique, le vinylphosphonate de bis(2-chloroéthyle)

- le 2-(méthacryloyloxy)éthyl phosphate,
- le 2-(acryloyloxy)éthyl phosphate,
- le 2-(méthacryloyloxy)propyl phosphate,
- le 2-(acryloyloxy)propyl phosphate, et
- l'acide vinyl phosphonique,
- l'acide2-(méthacryloyloxy)éthyl phosphonique,
- l'acide 2-(acryloyloxy)éthyl phosphonique,
- le 2-(méthacryloyloxy)éthyl phosphate, et
- le 2-(acryloyloxy)éthyl phosphate.

Les unités $A_A$ peuvent notamment être obtenues par polymérisation, afin de former la chaine macromoléculaire A, de monomères comprenant les monomères $A_A$ (le cas échéant en mélange avec d'autres monomères). Elle peuvent être obtenue également par polymérisation, afin de former au moins une chaine macromoléculaire précurseur $A_{précurseur}$, de monomères comprenant des monomères précurseurs de unités $A_A$ (le cas échéant en mélange avec d'autres monomères), conduisant à des unités précurseurs des unités $A_A$, puis modification chimique des unités précurseurs afin d'obtenir les unités $A_A$ dans la chaine macromoléculaire A. De telles modifications sont connues. Il peut par exemple s'agir d'hydrolyses d'unités comprenant un groupe ester hydrolysable (unités dérivant d'acrylate ou de méthacrylate d'éthyle ou de tertiobutyle par exemple).

La chaine macromoléculaire A peut comprendre des unités $A_{autres}$, différentes des unités $A_A$, ne comprenant pas de groupe anionique ou potentiellement anionique, dérivant de monomères $A_{autre}$, différent des monomères $A_A$, ne comprenant pas de groupe anionique ou potentiellement anionique. Il peut notamment s'agir:

- d'unités $N_{phile}$, neutres hydrophiles, dérivant de monomères $N_{phile}$ neutres hydrophiles (de tels unités et monomères sont décrits plus haut),
- d'unités $N_{phobe}$, neutres hydrophobes, dérivant de monomères $N_{phobe}$ neutres hydrophobes (de tels unités et monomères sont décrits plus haut)
- d'unités cationiques $A_C$, dérivant de monomères Ac cationiques,
- d'unités Z zwitterioniques, dérivant de monomères Z zwitterioniques (de tels unités et monomères sont décrits plus haut),
- d'unités C potentiellement cationiques dérivant de monomères potentiellement cationiques (de tels unités et monomères sont décrits plus haut),
- de leurs mélanges ou association.

La proportion en poids d'unités $A_{autre}$ dans la chaine macromoléculaire A peut être de 0 à 99%, de préférence de 0 à 90%, de préférence de 0 à 50%, par exemple de 0 à 25%. Elle peut avantageusement être nulle (pas d'unités $A_{autre}$). La chaine macromoléculaire A comprend de préférence de 1 à 100%, en poids, d'unités $A_A$, de préférence de 50% à 100%.

Dans le cas où une chaine macromoléculaire A comprend des unités Ac, leur proportion en nombre dans ladite chaîne est de préférence inférieure à celle dans la chaine macromoléculaires B. De préférence la proportion en nombre d'unités $A_C$ dans une chaine macromoléculaire A est inférieure à la proportion en nombre d'unités $A_A$. De préférence la proportion en nombre d'unités $A_C$ dans une chaine macromoléculaire A est inférieure à 10%, de préférence nulle.

A titre d'exemples de monomères $A_C$ dont peuvent dériver des unités $A_C$, on peut mentionner les monomères $B_C$ détaillés plus haut.

A titre d'exemple aussi, le copolymère ampholyte peut être un copolymère à blocs dans lequel le bloc A dérive de l'acide acrylique et le bloc B dérive d'un monomère cationique choisi parmi le DADMAC, le MAPTAC et l'APTAC.

Le copolymère ampholyte comprend de préférence plus, en nombre, d'unités $B_C$ que de groupes anioniques ou potentiellement anioniques. De préférence il comprend plus en nombre d'unités $B_C$ que d'unités $A_A$. De préférence, le rapport en poids entre la ou les chaine(s) macromoléculaire(s) B, de préférence le ou les bloc(s) B, et la partie A, de préférence la chaine macromoléculaire A, de préférence le bloc A, est supérieur à 1, par exemple supérieur à 2.

Le copolymère ampholyte peut notamment présenter une masse moléculaire moyenne théorique ou mesurée comprise entre 500 et 50000 g/mol. La ou les chaine(s) macromoléculaire(s) B, de préférence le ou les bloc(s) B, peut notamment présenter une masse moléculaire moyenne théorique ou mesurée comprise entre 500 et 49000 g/mol, de préférence entre 2000 et 48000 g/mol. La chaine macromoléculaire A, de préférence le bloc A, peut notamment présenter une masse moléculaire moyenne théorique ou mesurée comprise entre 250 et 20000 g/mol, de préférence entre 500 et 10000 g/mol.

Le copolymère ampholyte est de préférence hydrosoluble, et de préférence hydrosoluble sur la totalité de la gamme de pH allant de 5 à 8, de préférence de 4 à 9, de préférence de 1 à 11. La nature et les proportions des différentes unités peuvent être choisies à cet effet. De préférence il comprend moins de 50% en poids d'unités $N_{phobe}$, de préférence

moins de 25%, de préférence moins de 10%, par exemple pas du tout.

Le copolymère peut se présenter sous forme solide ou sous forme d'une solution, par exemple une solution aqueuse, alcoolique et/ou hydroalcoolique (par exemple dans un mélange éthanol ou isopropanol / eau). La concentration de la solution peut par exemple être de 5 à 75% en poids, typiquement de 10 à 50%.

Des procédés pour la préparation des copolymères ampholytes utilisables pour la présente invention vont maintenant être décrits.

Le copolymère ampholyte peut être préparé par tout procédé approprié, comprenant au moins une étape de polymérisation pour former la chaine macromoléculaire B ou une chaine précurseur modifiée chimiquement lors d'une étape ultérieure.

Pour préparer des télomères ampholytes (troisième mode de réalisation précité), on peut par exemple polymériser des monomères $B_C$ par polymérisation radicalaire en présence d'un agent présentant un groupe limiteur pouvant se greffer par réaction radicalaire sur la chaine propageante (par exemple un groupe thiol) et au moins un groupe carboxylique. Il peut s'agir par exemple d'un agent de formule $HOOC-CH_2-CH(COOH)-SH$.

Pour préparer un copolymère peigne (première variante du quatrième mode de réalisation précité) on peut procéder par les techniques usuelles de greffage de chaines macromoléculaires B sur une chaine macromoléculaire A présentant des fonctions réactives avec au moins un groupe en extrémité des chaines B. On peut alternativement faire croitre par polymérisation, de préférence par polymérisation radicalaire, de préférence par polymérisation radicalaire contrôlées, des chaines latérales B à partir de monomères $B_C$ sur une chaine macromoléculaire A préparée au préalable, comprenant au moins trois groupes, de préférence greffés à cet effet, ou portés par des unités copolymèrisées dans la chaine macromoléculaire A à cet effet, susceptibles d'initier la polymérisation. Il peut notamment s'agir de groupes de transfert susceptibles d'induire une polymérisation radicalaire contrôlée en présence de monomères insaturés et éventuellement d'une source de radicaux libres. De tels groupes sont connus dans le domaine de la polymérisation radicalaire contrôlée (techniques d'ATRP, de polymérisation en présence de nitroxydes, de polymérisation connues sous les noms RAFT et/ou MADIX, en présence de groupes -S-CS- etc..., certaines étant détaillées plus bas). Si on opère par croissance des chaines B sur le squelette A, à l'aide de monomères $B_C$ on opère de préférence à un pH tel que les unités $A_A$ sont sous une forme neutre, de préférence en milieu acide, par exemple à un pH inférieur ou égal à 4 de préférence à 3, par exemple à 2.

Dans le cadre de la deuxième variante du quatrième mode de réalisation, notamment pour préparer des copolymères à blocs comprenant un bloc A et au moins un bloc B, on peut notamment préparer le copolymère par des polymérisations séquentielles, de préférence de type polymérisations radicalaires contrôlées.

On peut notamment mettre en oeuvre un procédé comprenant les étapes suivantes:

étape 1): polymérisation, de préférence par polymérisation radicalaire contrôlée, de monomères de manière à obtenir un premier bloc choisi parmi le bloc A et le bloc B, ou un bloc précurseur du premier bloc,
étape 2): polymérisation, de préférence par polymérisation radicalaire contrôlée, de monomères de manière à obtenir au moins un deuxième bloc choisi parmi le bloc A si un bloc B ou un précurseur a été obtenu à l'étape 1, et le bloc B si un bloc A ou un précurseur à été obtenu à l'étape 1), ou un bloc précurseur du deuxième bloc,
étape 3) optionnelle: si des blocs précurseurs ont été obtenus lors des étapes 1) et/ou 2), modification chimique de ces blocs de manière ou à obtenir le bloc A et le bloc B.

Les étapes 1) et 2) sont séquentielles. Il n'est pas exclu d'opérer d'autres étapes de polymérisation avant l'étape 3). On peut préparer le bloc B lors de l'étape 1) puis un bloc A lors de l'étape 2), et éventuellement un autre bloc B lors d'une étape subséquente. On préfère toutefois préparer le bloc A lors de l'étape 1), puis au moins un bloc B, lors de l'étape 2). Dans tous les cas, on préfère opérer l'étape 2) sur un bloc issu de l'étape 1) ne portant pas de charge. A cet effet, si on prépare le bloc B lors de l'étape 2), en particulier si on opère directement à l'aide de monomères $B_C$ (sans modification chimique subséquente), on opère de préférence à un pH tel que les unités $A_A$ sont sous une forme neutre, de préférence en milieu acide, par exemple à un pH inférieur ou égal à 4 de préférence à 3, par exemple à 2. Si toutefois on prépare le bloc A lors de l'étape 2), alors on peut préférer préparer un précurseur du bloc B lors de l'étape 1), non ionique ou potentiellement cationique sous forme neutre, puis le modifier chimiquement lors de d'une étape 3). Si le monomère $B_C$ est de type ammonium diallylique, on préfère le polymériser lors de l'étape 2).

Des modifications chimiques pouvant être menées dans le cadre de l'étape 3) ont été décrites plus haut: il s'agit par exemple de quaternisations pour obtenir le bloc B, d'hydrolyse pour obtenir le bloc A. De préférence on n'opère pas d'étape 3) de modification chimique, en polymérisant directement des monomères $B_C$ lors d'une des étapes 1) ou 2) et des monomères $A_A$ lors de l'autre étape.

Le procédé peut notamment comprendre une étape de désactivation de groupes de transfert portés par des chaînes macromoléculaires, et/ou de purification du copolymère et/ou de destruction de sous-produits de modification chimique et/ou de désactivation. Une telle étape peut être opérée après les étapes de polymérisation. Elle peut être opérée avant ou après l'étape 3) si celle-ci est mise en oeuvre. Lors de l'étape de purification et/ou désactivation et/ou

destruction, optionnelle, les copolymères à blocs obtenus ou les sous-produits peuvent subir une réaction de purification ou de destruction de certaines espèces, par exemple par des procédés de type hydrolyse, oxydation, réduction, pyrolyse, ozonolyse ou substitution. Une étape d'oxydation avec de l'eau oxygénée est particulièrement appropriée pour traiter des espèces soufrées. On mentionne que certaines de ces réactions ou opérations peuvent avoir lieu en tout ou partie lors de l'étape 3). Dans ce cas, pour ces réactions ou opérations, les deux étapes sont simultanées.

De manière préférée, pour les étapes de polymérisation (étapes 1) et 2) notamment), on met en oeuvre des méthodes de polymérisation radicalaire dite vivante ou contrôlée, et de manière particulièrement préférée des méthodes de polymérisation radicalaire contrôlée ou vivante mettant en oeuvre un agent de transfert comprenant un groupe de transfert de formule -S-CS-, notamment connues sous les dénominations de RAFT ou MADIX.

A titre d'exemples de procédés de polymérisation dite vivante ou contrôlée, on peut notamment se référer :

- aux procédés des demandes WO 98/58974, WO 00/75207 et WO 01/42312 qui mettent en oeuvre une polymérisation radicalaire contrôlée par des agents de contrôle de type xanthates,
- au procédé de polymérisation radicalaire contrôlée par des agents de contrôles de type dithioesters ou trithiocarbonates de la demande WO 98/01478,
- au procédé de polymérisation radicalaire contrôlée par des agents de contrôle de type dithiocarbamates de la demande WO 99/31144,
  le procédé de polymérisation radicalaire contrôlée par des agents de contrôle de type dithiocarbazates de la demande WO 02/26836,
- au procédé de polymérisation radicalaire contrôlée par des agents de contrôle de type dithiophosphoroesters de la demande WO 02/10223,
- au procédé de la demande WO 99/03894 qui met en oeuvre une polymérisation en présence de précurseurs nitroxydes, ou les procédés mettant en ouvre d'autres nitroxydes ou complexes nitroxydes / alkoxyamines
- au procédé de la demande WO 96/30421 qui utilise une polymérisation radicalaire par transfert d'atome (ATRP),
- au procédé de polymérisation radicalaire contrôlée par des agents de contrôle de type iniferters selon l'enseignement de Otu et al., Makromol. Chem. Rapid. Commun., 3, 127 (1982),
- au procédé de polymérisation radicalaire contrôlée par transfert dégénératif d'iode selon l'enseignement de Tatemoto et al., Jap. 50, 127, 991 (1975), Daikin Kogyo Co ltd Japan et Matyjaszewski et al., Macromolecules, 28, 2093 (1995),
- au procédé de polymérisation radicalaire contrôlée par les dérivés du tetraphényléthane, divulgué par D. Braun et al. Dans Macromol. Symp. 111, 63 (1996), ou encore,
- au procédé de polymérisation radicalaire contrôlée par des complexes organocobalt décrit par Wayland et al. Dans J. Am. Chem. Soc. 116, 7973 (1994)
- au procédé de polymérisation radicalaire contrôlée par du diphényléthylène (WO 00/39169 ou WO 00/37507).

Les étapes 1) et 2) peuvent typiquement être mises en oeuvre par mise en présence des monomères, d'un agent de contrôle, et éventuellement d'au moins une source de radicaux libres. La source de radicaux libres peut être un initiateur. On utilise de préférence un tel initiateur lors de l'étape 1). On peut introduire à nouveau un initiateur lors de l'étape 2). On peut aussi utiliser des radicaux libres présents dans le milieu réactionnel issu de l'étape 1).

Les polymérisations peuvent être mises en oeuvre en présence d'initiateurs de radicaux libres, connus de l'homme du métier. On peut par exemple utiliser du persulfate de sodium. On peut typiquement mettre en oeuvre des quantités d'initiateurs de 5 à 50% en nombre par rapport à la quantité d'agent de transfert.

Les polymérisations sont avantageusement mises en oeuvre en solution, de préférence en milieu aqueux, alcoolique, ou hydro-alcoolique.

Des agents de transfert utiles pour la mise en ouvre du procédé (lors des étapes 1) et 2)) sont connus de l'homme du métier et incluent notamment des composés comprenant un groupe de transfert -S-CS-, pour la mise en oeuvre de procédés de polymérisation connus sous les termes de RAFT et/ou MADIX. On met de préférence en oeuvre un agent de transfert comprenant un groupe de transfert de formule -S-CS-O- (xanthate). De tels procédés et agents sont détaillés plus loin.

Lors des étapes de polymérisation, on peut opérer la préparation d'un premier bloc à partir de monomères ou d'un mélange de monomères, d'initiateurs et/ou d'agents favorisant le contrôle de la polymérisation (agents de transferts à groupes -S-CS-, nitroxydes etc...), puis la croissance d'un deuxième bloc sur le premier bloc pour obtenir un copolymère dibloc avec des compositions de monomères différentes de celles utilisées pour la préparation du bloc précédent, et éventuellement avec ajout d'initiateurs et/ou d'agents favorisant le contrôle de la polymérisation. Ces procédés de préparation de copolymères à blocs sont connus de l'homme du métier. On mentionne que le copolymère peut présenter en bout de chaîne ou au centre des chaînes un groupe de transfert ou un résidu d'un groupe de transfert, par exemple un groupe comprenant un groupe -S-CS- (par exemple issu d'un xanthate, d'un dithioester, d'un dithiocarbamate ou d'un trithiocarbonate) ou un résidu d'un tel groupe.

On mentionne qu'on ne sortirait pas du cadre de l'invention en mettant en oeuvre et en adaptant des procédés

de préparation conduisant à des copolymères tribloc le cas échéant modifiés par la suite (par exemple lors d'une étape spécifique ou lors d'une étape de destruction et/ou désactivation et/ou purification) de manière à obtenir des copolymères dibloc. Notamment il est envisageable de mettre en oeuvre des agents de transfert comprenant plusieurs groupes de transferts (par exemple des trithiocarbonates Z-S-CS-S-Z) conduisant à des copolymères téléchéliques de type R-[(bloc B)-(bloc A)]$_w$ comme des tribloc de type (coeur)-[(bloc A)-(bloc B)]$_x$ (par exemple (bloc A)- (bloc B)-R-(bloc B)-(bloc A) comme des tribloc (bloc A)-(bloc B)-(coeur)-(bloc B)-(bloc A)), puis de casser au niveau du coeur (sectionner, "cliver") les copolymères téléchéliques, pour obtenir des copolymères dibloc (bloc A)-(bloc B). La section peut intervenir lors d'une hydrolyse.

Les dispersions de l'invention présentent un potentiel zêta positif dans une gamme de pH comprise entre 1 et 11, plus particulièrement entre 3 et 11. En outre, ce potentiel zêta peut présenter une valeur stable sur une grande partie de cette gamme de pH. Par valeur stable on entend une variation de la valeur du potentiel zêta d'au plus 50% lorsque l'on fait varier, dans la gamme ci-dessus, le pH d'une dispersion colloïdale avec le copolymère ampholyte de l'invention et présentant un pH initial de l'ordre de 2 à 3.

Les dispersions de l'invention peuvent être préparées par mélange d'une dispersion colloïdale de départ du type décrit plus haut dans la partie A de la description avec une solution d'un copolymère ampholyte décrit aussi plus haut dans la partie B de la description. Ce mélange peut se faire à une température comprise entre la température ambiante et 100°C, par exemple vers 80°C environ. Le mélange se fait de préférence sous une agitation vive.

Comme utilisations possibles des dispersions de l'invention, on peut citer la catalyse notamment pour post combustion automobile. Dans ce cas les dispersions sont utilisées dans la préparation de catalyseurs. Les dispersions peuvent aussi être mises en oeuvre pour leurs propriétés anti-UV par exemple dans la préparation de films de polymères (du type acrylique ou polycarbonate par exemple), de peintures, de papiers ou de compositions cosmétiques notamment dans la préparation de crèmes anti-UV.

Des exemples vont maintenant être donnés.

Dans ces exemples, les exemples 1 à 8 concernent la préparation de polymères et les exemples 9 à 14 concernent des dispersions colloïdales.

La caractérisation des masses molaires relatives des polymères hydrophiles neutres ou anioniques (ex : homopolymères poly(acide acrylique) et poly(acrylamide)) est effectuée par chromatographie d'exclusion stérique (CES) utilisant une précolonne Shodex OH pak SB-G, (n° L410061) et de trois colonnes Shodex de 30 cm OH pak SB-806M HQ (n° L 411 054 ; L 411 055 ; L 411 056) et une phase mobile contenant de l'acétonitrile dans une solution eau permutée additivée avec 0,1 mol/L de NaNO3, le ratio volumique acétonitrile/eau est 20/80. Les caractérisations des masses molaires relatives des copolymères contenant un bloc cationique est effectuée par chromatographie d'exclusion stérique (CES) utilisant une précolonne Shodex OH pak SB-G, (n° L211067) et de trois colonnes Shodex de 30 cm OH pak SB-806M HQ (n° L 301011 ; L 301013; L 301014) et une phase mobile contenant de l'acétonitrile dans une solution eau permutée additivée par 1 mol/L $NH_4NO_3$ et de 100 ppm de DADMAC (de façon à passiver les colonnes), le ratio volumique acétonitrile/eau est 20/80. Toutes les mesures des masses molaires relatives sont effectuées par rapport à des étalons de poly(oxyde d'éthylène).

Dans les exemples l'eau utilisée est de l'eau permutée.

EXEMPLE 1

Cet exemple concerne la synthèse du poly(acide acrylique) (PAA).

Dans un réacteur en verre à double enveloppe de 2 L muni d'une agitation mécanique et d'une colonne réfrigérante, 31,87 g de O-éthyl-S-(1-methoxycarbonyl)éthyl) xanthate ($CH_3CHCO_2CH_3$)S(C=S)OEt, 101,3 g d'éthanol, 8,5 g d'acide acrylique et 23,64 g d'eau permutée sont introduits à température ambiante. La température de la solution est augmentée jusqu'à 70°C. Dès que cette température a été atteinte, 0,49 g d'acide 4,4'-azobis(cyanovalérique) sont introduits. Dès l'introduction de cet amorceur, une solution de 76,5 g d'acide acrylique dans 212,8 g d'eau est introduite pendant une heure. En fin d'introduction, 0,49 g d'acide 4,4'-azobis(cyanovalérique) sont à nouveau introduits. La réaction est prolongée pendant trois heures après la fin de l'introduction.

Un échantillon de polymère est prélevé. L'analyse du produit par chromatographie liquide haute performance (CLHP) permet de conclure que tout l'acide acrylique a réagi pendant la polymérisation. Une analyse en chromatographie d'exclusion stérique (CES) avec un étalonnage relatif de poly(oxyde d'éthylène) fournit les valeurs de masse molaire moyenne en nombre ($M_n$) et d'indice de polymolécularité ($M_w/M_n$) suivants : $M_n$=650 g/mole, $M_w/M_n$=1,60.

EXEMPLE 2

Cet exemple concerne la synthèse d'un copolymère dibloc P(acide acrylique - bloc- chlorure de diallyl diméthyl ammonium) : P(AA-DADMAC).

En fin de synthèse du premier bloc, telle que décrite dans l'exemple 1, la température est diminuée jusqu'à

65°C. Une fois cette température stabilisée, une solution de 706 g de chlorure de diallyl diméthyl ammonium (DADMAC) à 65% en poids dans l'eau, ainsi que 4 g d'amorceur V50 vendu par la société Wako (2,2'-azobis(2-méthylproprionamidine)dihydrochloride) sont introduits. La réaction est ensuite maintenue à cette température pendant douze heures. Au bout de 4 heures et 8 heures de réaction, 4 g d'amorceur V50 sont rajoutés à chaque fois au milieu réactionnel. En fin de réaction, un échantillon est prélevé. Une analyse en RMN $^1$H donne une conversion en DADMAC égale à 98,2%. Mn et Mw/Mn sont mesurés par CES dans l'eau avec une courbe d'étalonnage poly(oxyde d'éthylène): $M_n$=2500 ; $M_w/M_n$=1,50. La superposition des deux chromatogrammes des produits de l'exemple 1 et de l'exemple 2 permet de conclure à la nature dibloc du copolymère formé. En effet, le chromatogramme CES du produit de l'exemple 1 est totalement déplacé vers le domaine des plus hautes masses moléculaires à la fin de la synthèse du produit de l'exemple 2.

EXEMPLE 3

Cet exemple concerne la synthèse du poly(acide acrylique) (PAA).

Dans un réacteur en verre à double enveloppe de 250 mL muni d'une agitation magnétique et d'une colonne réfrigérante, 6,2 g de O-éthyl-S-(1-méthoxycarbonyl)éthyl) xanthate $(CH_3CHCO_2CH_3)S(C=S)OEt$, 23,7 g d'éthanol, 30 g d'acide acrylique et 74,9 g d'eau permutée sont introduits à température ambiante et soumis à un flux d'azote pendant 5min. La température de la solution est augmentée jusqu'à 70°C. Dès que cette température a été atteinte, 0,167 g d'acide 4,4'-azobis(cyanovalérique) est introduit. Au bout de trois heures de reflux, 0,167 g d'acide 4,4'-azobis(cyanovalérique) est à nouveau introduit. La réaction est prolongée pendant quatre heures de plus sous agitation magnétique.

Un échantillon de polymère est prélevé. L'analyse du produit par chromatographie liquide haute performance (CLHP) permet de conclure que tout l'acide acrylique a réagi pendant la polymérisation. Une analyse en chromatographie d'exclusion stérique (CES) avec un étalonnage relatif de poly(oxyde d'éthylène) fournit les valeurs de masse molaire moyenne en nombre ($M_n$) et d'indice de polymolécularité ($M_w/M_n$) suivants : $M_n$=960 g/mol, $M_w/M_n$=1,70.

EXEMPLE 4

Cet exemple concerne la synthèse d'un copolymère dibloc P(acide acrylique - bloc - chlorure de (3-acrylamidopropyl)triméthylammonium) : P(AA-APTAC).

En fin de synthèse du premier bloc, telle que décrite dans l'exemple 3, la température est diminuée jusqu'à 65°C. Une fois cette température stabilisée, une solution de 15,7 g de chlorure de (3-acrylamidopropyl)triméthylammonium) (APTAC) à 75% en poids dans l'eau, 0,073 g d'amorceur V50 (2,2'-azobis(2-méthylproprionamidine)dihydrochloride) et 10 g d'eau permutée, préalablement dégasée par un flux d'azote (5min), sont introduits dans la solution du premier bloc. La réaction est ensuite maintenue à cette température (65°C) pendant 9h30 sous agitation magnétique. Au bout de 4 heures de réaction, 0,073 g d'amorceur V50 est rajouté au milieu réactionnel. En fin de réaction, un échantillon est prélevé. Une analyse en RMN $^1$H donne une conversion en APTAC égale à 99%. Mn et Mw/Mn sont mesurés par CES, après étalonnage avec du poly(oxyde d'éthylène) donnent : $M_n$=2740 g/mol; $M_w/M_n$=1,50. La superposition des deux chromatogrammes des produits de l'exemple 3 et de l'exemple 4 permet de conclure à la nature dibloc du copolymère formé. En effet, le chromatogramme CES du produit de l'exemple 3 est totalement déplacé vers le domaine des plus hautes masses moléculaires à la fin de la synthèse du produit de l'exemple 4.

EXEMPLE 5

Cet exemple concerne la synthèse du poly(acrylamide) (PAM).

Dans un réacteur en verre à double enveloppe de 250 mL muni d'une agitation magnétique et d'une colonne réfrigérante, 12,6 g de O-éthyl-S-(1-méthoxycarbonyl)éthyl) xanthate $(CH_3CHCO_2CH_3)S(C=S)OEt$, 39,8 g d'éthanol, 60,0 g d'une solution d'acrylamide à 50% et 46,2 g d'eau permutée sont introduits à température ambiante et soumis à un flux d'azote pendant 5 min. La température de la solution est augmentée jusqu'à 70°C. Dès que cette température a été atteinte, 0,169 g d'acide 4,4'-azobis(cyanovalérique) est introduit. Au bout de trois heures de reflux, 0,169 g d'acide 4,4'-azobis(cyanovalérique) est à nouveau introduit. La réaction est prolongée pendant quatre heures de plus sous agitation magnétique.

Un échantillon de polymère est prélevé. L'analyse du produit par chromatographie liquide haute performance (CLHP) permet de conclure que tout l'acrylamide a réagi pendant la polymérisation. Une analyse en chromatographie d'exclusion stérique (CES) avec un étalonnage relatif de poly(oxyde d'éthylène) fournit les valeurs de masse molaire moyenne en nombre ($M_n$) et d'indice de polymolécularité ($M_w/M_n$) suivants : $M_n$= 530 g/mol, $M_w/M_n$= 2,45.

EXEMPLE 6

Cet exemple concerne la synthèse d'un copolymère dibloc P(acrylamide - bloc - chlorure de (3-acrylamidopropyl)triméthylammonium) : P(AM-APTAC).

En fin de synthèse du premier bloc, telle que décrite dans l'exemple 5, la température est diminuée jusqu'à 65°C. Une fois cette température stabilisée, une solution de 31,4 g de chlorure de (3-acrylamidopropyl)triméthylammonium) (APTAC) à 75% en poids dans l'eau, 0,034 g d'amorceur V50 (2,2'-azobis(2-méthylproprionamidine)dihydrochloride) et 20 g d'eau permutée, préalablement dégasée par un flux d'azote (5 min), sont introduits dans la solution du premier bloc. La réaction est ensuite maintenue à cette température (65°C) pendant 9h30 sous agitation magnétique. Au bout de 4 heures de réaction, 0,034 g d'amorceur V50 est rajouté au milieu réactionnel. En fin de réaction, un échantillon est prélevé. Une analyse en RMN $^1$H donne une conversion en APTAC égale à 99%. Mn et Mw/Mn sont mesurés par CES, après étalonnage avec du poly(oxyde d'éthylène) donnent : $M_n$= 3000 g/mol; $M_w/M_n$=1,50. La superposition des deux chromatogrammes des produits des exemples 5 et 6 permet de conclure à la nature dibloc du copolymère formé. En effet, le chromatogramme CES du produit de l'exemple 5 est totalement déplacé vers le domaine des plus hautes masses moléculaires à la fin de la synthèse du produit de l'exemple 6.

EXEMPLE 7

Cet exemple concerne la synthèse du poly(acrylamide) (PAM).

Dans un réacteur en verre à double enveloppe de 250 mL muni d'une agitation magnétique et d'une colonne réfrigérante, 4,22 g de O-éthyl-S-(1-méthoxycarbonyl)éthyl) xanthate $(CH_3CHCO_2CH_3)S(C=S)OEt$, 25,0 g d'éthanol, 60,0 g d'une solution d'acrylamide à 50% et 40,1 g d'eau permutée sont introduits à température ambiante et soumis à un flux d'azote pendant 5 min. La température de la solution est augmentée jusqu'à 70°C. Dès que cette température a été atteinte, 0,167 g d'acide 4,4'-azobis(cyanovalérique) est introduit. Au bout de trois heures de reflux, 0,167g d'acide 4,4'-azobis(cyanovalérique) est à nouveau introduit. La réaction est prolongée pendant quatre heures de plus sous agitation magnétique.

Un échantillon de polymère est prélevé. L'analyse du produit par chromatographie liquide haute performance (CLHP) permet de conclure que tout l'acrylamide a réagi pendant la polymérisation. Une analyse en chromatographie d'exclusion stérique (CES) avec un étalonnage relatif de poly(oxyde d'éthylène) fournit les valeurs de masse molaire moyenne en nombre ($M_n$) et d'indice de polymolécularité ($M_w/M_n$) suivants : $M_n$= 710 g/mol, $M_w/M_n$= 2,25.

EXEMPLE 8

Cet exemple concerne la synthèse d'un copolymère dibloc P(acrylamide - bloc - chlorure de (3-acrylamidopropyl)triméthylammonium) : P(AM-APTAC).

En fin de synthèse du premier bloc, telle que décrite dans l'exemple 7, la température est diminuée jusqu'à 65°C. Une fois cette température stabilisée, une solution de 30,9 g de chlorure de (3-acrylamidopropyl)triméthylammonium) (APTAC) à 75% en poids dans l'eau, 0,011 g d'amorceur V50 (2,2'-azobis(2-méthylproprionamidine)dihydrochloride) et 20 g d'eau déminéralisée, préalablement dégasée par un flux d'azote (5 min), sont introduits dans la solution du premier bloc. La réaction est ensuite maintenue à cette température (65°C) pendant 9h30 sous agitation magnétique. Au bout de 4 heures de réaction, 0,011 g d'amorceur V50 est rajouté au milieu réactionnel. En fin de réaction, un échantillon est prélevé. Une analyse en RMN $^1$H donne une conversion en APTAC égale à 99%. Mn et Mw/Mn sont mesurés par CES, après étalonnage avec du poly(oxyde d'éthylène) donnent : $M_n$= 3180 g/mol; $M_w/M_n$=1,44. La superposition des deux chromatogrammes des produits des exemples 7 et 8 permet de conclure à la nature dibloc du copolymère formé. En effet, le chromatogramme CES du produit de l'exemple 7 est totalement déplacé vers le domaine des plus hautes masses moléculaires à la fin de la synthèse du produit de l'exemple 8.

EXEMPLE 9

Cet exemple concerne la synthèse d'une dispersion colloïdale d'oxyde de cérium.

Une solution de nitrate de cérium diluée est préparée par addition de 6,4 kg d'une solution de nitrate de cérium trivalent 2,88 M (d=1,715), de 1,0 kg d'une solution de $HNO_3$ 68%, de 4,8 kg d'eau permutée et de 10,64 g de nitrate de cérium tétravalent 1,39 M (d=1,440). Cette solution, de rapport molaire $Ce^{4+}/Ce_{total}$ de 1/1500, est chargée dans un réservoir semi-fermé puis dégazée sous vive agitation et sous bullage d'azote.

Une solution d'ammoniaque diluée est préparée par ajout de 22,6 kg d'eau permutée et d'une solution de 4,6 kg d'ammoniaque à 28%. Cette solution est chargée dans un réacteur double enveloppe de 40L semi fermé puis mise sous agitation et sous bullage d'azote.

La solution de nitrate de cérium diluée est ensuite ajoutée à température ambiante dans la solution d'ammoniaque diluée en 30 min. sous agitation et sous balayage d'azote. Le mélange réactionnel est ensuite monté en température à 80°C en ¾ d'heure puis maintenu à cette température pendant 4h toujours sous balayage d'azote.

A l'issue de ce traitement thermique, le mélange réactionnel est laissé à refroidir puis il est filtré et lavé sur

filtre Nutsche. Le gâteau est remis en suspension dans l'eau permutée et acidifié par ajout d'acide nitrique 68% ce qui conduit à une dispersion à 17,9% poids en $CeO_2$ ayant un pH de 3,0.

La taille des particules secondaires est mesurée à partir d'un granulomètre laser de type Horiba LA910 en considérant une valeur de l'indice optique de $CeO_2$ dans eau de 1,7. La taille médiane $d_{50}$ est de 109 nm. L'indice de dispersion σ/m calculé à partir des valeurs $d_{10}$, $d_{50}$ et $d_{90}$ respectivement de 89, 109 et 133 nm est de 0,20.

La suspension est observée en MET. On constate que les particules primaires sont bien monodisperses et de taille centrée autour de 60 nm. Sur une photo de plusieurs centaines de particules représentatives de la suspension, on dénombre et on mesure chacune des particules, ce par quoi on obtient une taille moyenne de 62 nm avec un écart type de 6 nm, ce qui représente 10% de la taille de la valeur moyenne.

Une partie de la dispersion est séchée à l'étuve à 200°C, ce qui permet l'obtention d'une poudre de $CeO_2$ pour l'analyse DRX. Le diffractogramme X de cette poudre a la signature de $CeO_2$ cristallisé (fiche ASTM 34-394). La taille moyenne de la zone de cohérence calculée à partir de la largeur à mi-hauteur des pics de diffraction situés à $2\theta$ = 28,6°, 47,5° et 56,4° par application du modèle de Scherrer donne 82 nm. La surface spécifique BET déterminée par adsorption d'azote est de 13,5 $m^2/g$, ce qui donne une taille moyenne des particules primaires de 62 nm.

EXEMPLE 10 (selon l'invention)

Cet exemple concerne la synthèse d'une dispersion colloïdale d'oxyde de cérium selon l'invention qui est stable et cationique sur toute la gamme de pH comprise entre 1 et 11.

<u>Préparation de la dispersion</u>

80 g d'une solution de PAA-PDADMAC 0,5K-3K à 0,025% poids en PAA-PDADMAC sont préparés par dilution de la solution de PAA-PDADMAC 0,5K-3K décrite à l'exemple 2 avec de l'eau permutée.

80 g d'une dispersion colloïdale de $CeO_2$ à 5% poids sont préparés par dilution à l'eau permutée de la dispersion colloïdale de $CeO_2$ décrite à l'exemple 9.

La dispersion colloïdale de $CeO_2$ à 5% poids est ajoutée à température ambiante et sous vive agitation dans la solution de PAA-PDADMAC 0,5K-3K à 0,025% poids en 10 min. A l'issue de cet ajout, la concentration en $CeO_2$ est de 2,5% poids. Le ratio massique PAA-PDADMAC / $CeO_2$ est égal à 0,5% poids.

La taille des particules secondaires est mesurée à partir d'un granulomètre laser de type Horiba LA910 en considérant une valeur de l'indice optique de $CeO_2$ dans l'eau de 1,7. La taille médiane $d_{50}$ est de 105 nm et l'indice de dispersion σ/m calculé à partir des valeurs $d_{10}$, $d_{50}$ et $d_{90}$ respectivement de 89, 105 et 131 nm est de 0,20.

Sur une aliquote de cette dispersion colloïdale acide, on ajoute sous vive agitation quelques gouttes d'une solution d'ammoniaque à 28% de manière à remonter le pH à 10,6. On n'observe aucune décantation. La taille des particules secondaires est mesurée à partir d'un granulomètre laser de type Horiba LA910 en considérant une valeur de l'indice optique de $CeO_2$ dans l'eau de 1,7. La taille médiane $d_{50}$ est de 106nm et l'indice de dispersion σ/m calculé à partir des valeurs $d_{10}$, $d_{50}$ et $d_{90}$ respectivement de 88, 106 et 130nm est de 0,20.

<u>Mesure du potentiel zêta</u>

Une solution diluée de $KNO_3$ est préparée par dilution de 1,0110 g de $KNO_3$ (M=101,103 g/mol) complétés à 100g par de l'eau permutée. A une aliquote de 4 g de la dispersion colloïdale acide de $CeO_2$ stabilisé PAA-PDADMAC sont ajoutés 10 g de la solution diluée de $KNO_3$ et 86 g d'eau permutée, ce qui conduit à une dispersion colloïdale de $CeO_2$ stabilisée PAA-PDADMAC à 0,1% poids en $CeO_2$ et $10^{-2}$ mol/L en $KNO_3$. Le ratio PAA-PDADMAC / $CeO_2$ reste inchangé et égal à 0,5% poids. Le pH est de 3,3 et la conductivité ionique de 1,7 mS/cm. Le potentiel zêta est mesuré à partir d'un appareil de type Malvern ZetaSizer Nano-ZS. La courbe de potentiel zêta est obtenue par remontée progressive du pH jusqu'à pH=11 par ajout d'une solution de KOH à $10^{-2}$ mol/L. La même courbe est établie avec la dispersion colloïdale de $CeO_2$ décrite à l'exemple 9.

La figure 1 donne les courbes de potentiel zêta ainsi obtenues. La courbe pleine est celle correspondant au produit de l'exemple 10 et elle montre que le potentiel zêta est positif sur toute la gamme de pH comprise entre pH=1 et pH=11. La courbe en pointillés correspond à celle du produit de l'exemple 9.

EXEMPLES 11 à 14

Les exemples 11 et 12 concernent la synthèse de dispersions colloïdales d'oxyde de cérium selon l'invention, stables et cationique sur toute la gamme de pH comprise entre 1 et 11. Les exemples 13 et 14 sont des exemples comparatifs qui concernent des dispersions colloïdales d'oxyde de cérium comprenant un copolymère dont aucun bloc ne contient un groupement anionique.

Préparation des dispersions

Solution A : 100 mL d'une dispersion colloïdale de $CeO_2$ à 20 g/L, est préparée par dilution à l'eau permutée d'une dispersion colloïdale de $CeO_2$ parfaitement transparente dont la taille des particules secondaires, mesurée par diffusion quasi-élastique de la lumière (DQEL), est de 8 nm et la taille des particules primaires de 3 nm. Le pH est de 1,4 et la conductivité ionique de 10 mS/cm.

Solution B : 100 mL d'une solution de polymère à la concentration de 20 g/L est préparée dans un bécher, à température ambiante, et agitée jusqu'à l'obtention d'une solution limpide et transparente.

On ajoute à la solution A, maintenue sous vive agitation et à température ambiante, la solution B en 15 min. A l'issu de cet ajout, la concentration finale en $CeO_2$ est de 10 g/L. La dispersion colloïdale acide de $CeO_2$ ainsi stabilisée par le polymère conserve ses propriétés initiales, à savoir une parfaite transparence et une parfaite stabilité dans le temps.

Sur une aliquote de cette dispersion colloïdale acide, on ajoute, sous vive agitation, quelques gouttes d'une solution d'ammoniaque à 28% de manière à remonter le pH à 10,5. La taille des particules secondaires, mesurée par DQEL, de la dispersion colloïdale basique de $CeO_2$ stabilisée polymère ainsi obtenue est présenté dans le tableau 1 ci-dessous. On remarque que les dispersions colloïdales de $CeO_2$ des exemples 11 et 12, stabilisées par les polymères décrits dans les exemples 2 et 4 conduisent à des solutions transparentes et stables dans le temps, dont les tailles des particules, mesurées par DQEL, sont comparables à celle mesurées avant le début de l'ajout de l'ammoniaque. Au contraire, les dispersions colloïdales de $CeO_2$ des exemples 13 et 14, stabilisées par les polymères décrits dans les exemples 6 et 8, conduisent à des dispersions instables qui floculent.

Tableau 1

| Exemple | Polymère | Concentration en polymère (g/L) | Ratio massique Polymère/$CeO_2$ | pH | DQEL |
|---|---|---|---|---|---|
| 11 | P(AA-DADMAC) 0,5K-3K (Exemple 2) | 20 | 1 | 2,3<br>5,3<br>6,7<br>7,8<br>8,5<br>9,5<br>10,6 | 24<br>25<br>24<br>22<br>23<br>22<br>22 |
| 12 | P(AA-APTAC) 1 K-3K (Exemple 4) | 20 | 1 | 2,0<br>5,3<br>7,1<br>8,2<br>9,0<br>10,4 | 17<br>17<br>18<br>18<br>17<br>18 |
| 13 | P(AM-APTAC) 0,5K-3K (exemple 6) | 20 | 1 | 3,4<br>5,4<br>7,3<br>9,5<br>10,6 | Flocculation<br>Flocculation<br>Flocculation<br>Flocculation<br>Flocculation |
| 14 | P(AM-APTAC) 1,5K-9K (exemple 8) | 20 | 1 | 3,3<br>5,5<br>6,6 | Flocculation<br>Flocculation<br>121 |

Mesure du potentiel zêta

Une solution diluée de $KNO_3$ est préparée par dilution de 1,0110 g de $KNO_3$ (M=101,103g/mol) et complétée à 100 g par de l'eau permutée. A une aliquote de 4 g de la dispersion colloïdale acide de $CeO_2$ stabilisé PAA-PDADMAC (polymère issu de l'exemple 2 et additionné de $CeO_2$ selon l'exemple 11) est ajouté 10 g de la solution diluée de $KNO_3$ et 86 g d'eau permutée, ce qui conduit à une dispersion colloïdale de $CeO_2$ stabilisée PAA-PDADMAC à 0,1% poids en $CeO_2$ et $10^{-2}$ mol/L en $KNO_3$. Le ratio massique PAA-PDADMAC / $CeO_2$ est égal à 1. Le pH est de 3,3 et la conductivité ionique de 1,7 mS/cm. Le potentiel zêta est mesuré à partir d'un appareil de type Malvern ZetaSizer Nano-ZS. La courbe

de potentiel zêta est obtenue par remontée progressive du pH jusqu'à pH=11 par ajout d'une solution de KOH à $10^{-2}$ mol/L.

La figure 2 donne les courbes de potentiel zêta ainsi obtenues. La courbe pleine est celle correspondant au produit de l'exemple 11 et elle montre que le potentiel zêta est positif sur toute la gamme de pH comprise entre pH=1 et pH=10,7. La courbe en pointillés correspond à celle de la dispersion colloïdale de $CeO_2$ de la solution A donc sans ajout de polymère.

**Revendications**

1. Dispersion colloïdale de particules minérales dans une phase liquide, **caractérisée en ce qu'**elle contient un copolymère ampholyte comprenant au moins une chaine macromoléculaire B et une partie A liée à une unique extrémité d'au moins une chaine macromoléculaire B, dans lequel:

   - la chaine macromoléculaire B comprend des unités $B_C$ cationiques, dérivant de monomères $B_C$ cationiques,
   - la partie A est un groupement polymérique ou non polymérique comprenant au moins un groupe anionique ou potentiellement anionique.

2. Dispersion selon la revendication 1, **caractérisée en ce qu'**elle présente un potentiel zêta positif dans une gamme de pH comprise entre 1 et 11, plus particulièrement entre 3 et 11.

3. Dispersion selon la revendication 1 ou 2, **caractérisée en ce que** les particules minérales sont des particules à base d'un oxyde, d'un hydroxyde et/ou d'un oxyhydroxyde d'un élément métallique choisi parmi le cérium, le titane, le zirconium, l'aluminium et le fer; un mélange d'oxyde, d'hydroxyde et/ou d'oxyhydroxyde de cérium avec au moins un autre élément choisi parmi les terres rares ou l'étain ou un mélange d'oxyde, d'hydroxyde et/ou d'oxyhydroxyde de zirconium et d'une terre rare trivalente.

4. Dispersion selon l'une des revendications précédentes, **caractérisée en ce que** les particules minérales sont des particules d'oxyde de cérium, ces particules (particules secondaires) présentant une taille moyenne d'au plus 200 nm, ces particules secondaires étant constituées de particules primaires dont les tailles présentent une valeur moyenne d'au plus 100 nm avec un écart type dont la valeur est d'au plus 30% de ladite taille moyenne.

5. Dispersion selon la revendication 4, **caractérisée en ce que** les particules primaires ont des tailles qui présentent un écart type dont la valeur est d'au plus 20% de ladite taille moyenne.

6. Dispersion selon l'une des revendications 4 ou 5, **caractérisée en ce que** les particules primaires ont des tailles qui présentent une valeur moyenne d'au plus 80 nm, plus particulièrement d'au plus 60 nm.

7. Dispersion selon l'une des revendications précédentes, **caractérisée en ce que** la partie A du copolymère ampholyte précité est choisie parmi les groupements suivants:

   - une chaine macromoléculaire A comprenant des unités $A_A$ anioniques ou potentiellement anioniques, dérivant de monomères $A_A$ anioniques ou potentiellement anioniques,
   - une unité de bout de chaine comprenant au moins un groupe anionique ou potentiellement anionique.

8. Dispersion selon l'une des revendications précédentes, **caractérisée en ce que** les unités $B_C$ cationiques de la chaine macromoléculaire B comprennent un groupe ammonium quaternaire.

9. Dispersion selon l'une des revendications précédentes, **caractérisée en ce que** le groupe anionique ou potentiellement anionique précité comprend, le cas échéant sous forme acide, un groupe choisi parmi les groupes suivants:

   - le groupe carboxylate $-COO^-$
   - le groupe sulfonate $-SO_3^-$
   - le groupe sulfate $-SO_4^-$
   - le groupe phosphonate $-PO_3^{2-}$
   - le groupe phosphate $-PO_4^{2-}$.

10. Dispersion selon l'une des revendications précédentes, **caractérisée en ce que** le copolymère ampholyte est un télomère de structure A-B, où A est une unité de bout de chaine comprenant au moins un groupe anionique ou

potentiellement anionique.

**11.** Dispersion selon l'une des revendications 1 à 7, **caractérisée en ce que** la partie A du copolymère ampholyte est une chaine macromoléculaire A comprenant des unités $A_A$ anioniques ou potentiellement anioniques, dérivant de monomères $A_A$ anioniques ou potentiellement anioniques, et le copolymère ampholyte est choisi parmi les copolymères suivants:

- copolymère dibloc (bloc A)-(bloc B), la partie A constituant le bloc A et la chaine macromoléculaire B constituant le bloc B,
- copolymère tribloc (bloc B)-(bloc A)-(bloc B), la partie A constituant le bloc A et la chaine macromoléculaire B constituant le bloc B,
- copolymère peigne (squelette A)-(chaines latérales B), la partie A constituant le squelette A et le copolymère comprenant une pluralité de chaines macromoléculaires B liées chacune au squelette A à une de leurs extrémités.

**12.** Dispersion selon la revendication 11, **caractérisée en ce que** le copolymère ampholyte est un copolymère dibloc ou tribloc linéaire dont le bloc A et/ou le bloc B dérive de monomères éthylèniquement insaturés.

**13.** Dispersion selon l'une des revendications précédentes, **caractérisée en ce que** les unités $B_c$ sont des unités cationiques choisies parmi les unités dérivant des monomères cationiques suivants:

- le chlorure de triméthylammoniumpropylméthacrylate,
- le chlorure ou le bromure de triméthylammoniuméthylacrylamide ou méthacrylamide,
- le méthylsulfate de triméthylammoniumbutylacrylamide ou méthacrylamide,
- le méthylsulfate de triméthylammoniumpropylméthacrylamide (MAPTA MeS),
- le chlorure de (3-méthacrylamidopropyl)triméthylammonium (MAPTAC),
- le chlorure de (3-acrylamidopropyl)triméthylammonium (APTAC),
- le chlorure ou le méthylsulfate de méthacryloyloxyéthyl triméthylammonium,
- les sels d'acryloyloxyéthyl triméthylammonium (ADAMQUAT),
- le bromure, chlorure ou méthylsulfate de 1-éthyl 2-vinylpyridinium, de 1-éthyl 4-vinylpyridinium ;
- le chlorure de N,N-diméthyldiallylammonium (DADMAC) ;
- le chlorure de diméthylaminopropylméthacrylamide,N-(3-chloro-2-hydroxypropyl) triméthylammonium (DIQUAT) ;
- le monomère de formule

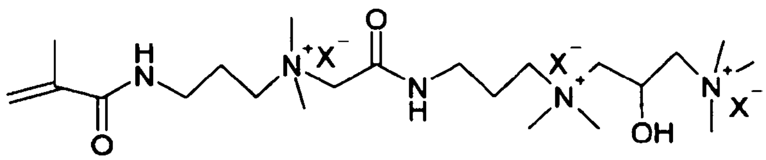

où X- est un anion, de préférence chlorure ou méthylsulfate.

**14.** Dispersion selon l'une des revendications 1 à 9 ou 11 à 13, **caractérisée en ce que** la partie A du copolymère ampholyte est une chaine macromoléculaire A comprenant des unités $A_A$ anioniques ou potentiellement anioniques, dérivant de monomères $A_A$ anioniques ou potentiellement anioniques, et **en ce que** les unités $A_A$ sont des unités anioniques ou potentiellement anioniques choisies parmi les unités dérivant des monomères $A_A$ anioniques ou potentiellement anioniques suivants:

• les acides ou anhydrides acrylique, méthacrylique, maléique, l'acide fumarique, l'acide itaconique, le N-méthacroyl alanine, le N-acryloylglycine et leurs sels hydrosolubles,
• le 2-sulfooxyéthyl méthacrylate, l'acide vinylbenzène sulfonique, l'acide allyl sulfonique, le 2-acrylamido-2méthylpropane sulfonique, l'acrylate ou le méthacrylate de sulfoéthyle, l'acrylate ou le méthacrylate de sulfopropyle et leurs sels hydrosolubles,
• l'acide vinylphosphonique, les esters de phosphates éthyléniquement insaturés.

**15.** Dispersion selon l'une des revendications précédentes, **caractérisée en ce que** la chaine macromoléculaire B du

copolymère ampholyte comprend des unités $B_{autre}$ différentes des unités $B_C$, dérivant d'au moins un monomère $B_{autre}$, de préférence choisies parmi les unités $B_N$ neutre hydrophile ou hydrophobe, dérivant d'un monomère $B_N$ neutre hydrophile ou hydrophobe.

**16.** Dispersion selon la revendication 15, **caractérisée en ce que** la chaine macromoléculaire B du copolymère ampholyte comprend de 1 à 100%, en poids, d'unités $B_C$, de préférence de 50% à 100%.

**17.** Dispersion selon l'une des revendications 1 à 9 ou 11 à 16, **caractérisée en ce que** la partie A du copolymère ampholyte est une chaine macromoléculaire A comprenant des unités $A_A$ anioniques ou potentiellement anioniques, dérivant de monomères $A_A$ anioniques ou potentiellement anioniques, et **en ce que** la chaine macromoléculaire A comprend des unités $A_{autre}$ différentes des unités $A_A$, dérivant d'au moins un monomère $A_{autre}$, de préférence choisies parmi les unités $A_N$ neutre hydrophile ou hydrophobe, dérivant d'un monomère $A_N$ neutre hydrophile ou hydrophobe.

**18.** Dispersion selon la revendication 17, **caractérisée en ce que** la chaine macromoléculaire A du copolymère ampholyte comprend de 1 à 100%, en poids, d'unités $A_A$, de préférence de 50% à 100%.

## Patentansprüche

**1.** Kolloidale Dispersion von anorganischen Teilchen in einer flüssigen Phase, **dadurch gekennzeichnet, dass** sie ein ampholytisches Copolymer mit mindestens einer makromolekularen Kette B und einen an ein einziges Ende der mindestens einen makromolekularen Kette B gebundenen Teil A enthält, wobei:

- die makromolekulare Kette B kationische Einheiten $B_C$, die sich von kationischen Monomeren $B_C$ ableiten, umfasst,
- es sich bei dem Teil A um eine polymere oder nicht-polymere Gruppierung mit mindestens einer anionischen oder potentiell anionischen Gruppe handelt.

**2.** Dispersion nach Anspruch 1, **dadurch gekennzeichnet, dass** sie in einem pH-Bereich zwischen 1 und 11, spezieller zwischen 3 und 11, ein positives Zeta-Potenzial aufweist.

**3.** Dispersion nach Anspruch 1 oder 2, **dadurch gekennzeichnet, dass** es sich bei den anorganischen Teilchen um Teilchen auf Basis eines Oxids, eines Hydroxids und/oder eines Oxidhydroxids eines Metallelements, das aus Cer, Titan, Zirconium, Aluminium und Eisen ausgewählt ist; eine Mischung von Oxid, Hydroxid und/oder Oxidhydroxid von Cer mit mindestens einem anderen Element, das aus Seltenerdmetallen oder Zinn ausgewählt ist, oder eine Mischung von Oxid, Hydroxid und/oder Oxidhydroxid von Zirconium und einem dreiwertigen Seltenerdmetall handelt.

**4.** Dispersion nach einem der vorhergehenden Ansprüche, **dadurch gekennzeichnet, dass** es sich bei den anorganischen Teilchen um Ceroxidteilchen handelt, wobei diese Teilchen (Sekundärteilchen) eine mittlere Größe von höchstens 200 nm aufweisen, wobei diese Sekundärteilchen aus Primärteilchen mit Größen, die einen mittleren Wert von höchstens 100 nm aufweisen, bestehen, wobei die Standardabweichung einen Wert von höchstens 30% der mittleren Größe hat.

**5.** Dispersion nach Anspruch 4, **dadurch gekennzeichnet, dass** die Primärteilchen Größen haben, die eine Standardabweichung aufweisen, die einen Wert von höchstens 20% der mittleren Größe hat.

**6.** Dispersion nach einem der Ansprüche 4 und 5, **dadurch gekennzeichnet, dass** die Primärteilchen Größen haben, die einen mittleren Wert von höchstens 80 nm, spezieller höchstens 60 nm, aufweisen.

**7.** Dispersion nach einem der vorhergehenden Ansprüche, **dadurch gekennzeichnet, dass** der Teil A des obigen ampholytischen Copolymers aus den folgenden Gruppierungen ausgewählt ist:

- einer makromolekularen Kette A mit anionischen oder potentiell anionischen Einheiten $A_A$, die sich von anionischen oder potentiell anionischen Monomeren $A_A$ ableiten,
- einer Kettenenden-Einheit mit mindestens einer anionischen oder potentiell anionischen Gruppe.

**8.** Dispersion nach einem der vorhergehenden Ansprüche, **dadurch gekennzeichnet, dass** die kationischen Einheiten

$B_C$ der makromolekularen Kette B eine quaternäre Ammoniumgruppe umfassen.

**9.** Dispersion nach einem der vorhergehenden Ansprüche, **dadurch gekennzeichnet, dass** die obige anionische oder potentiell anionische Gruppe eine aus den folgenden Gruppen ausgewählte Gruppe, gegebenenfalls in Säureform, umfasst:

- die Carboxylatgruppe $-COO^-$
- die Sulfonatgruppe $-SO_3^-$
- die Sulfatgruppe $-SO_4^-$
- die Phosphonatgruppe $-PO_3^{2-}$
- die Phosphatgruppe $-PO_4^{2-}$.

**10.** Dispersion nach einem der vorhergehenden Ansprüche, **dadurch gekennzeichnet, dass** es sich bei dem ampholytischen Copolymer um ein Telomer mit der Struktur A-B handelt, wobei A eine Kettenenden-Einheit mit mindestens einer anionischen oder potentiell anionischen Gruppe ist.

**11.** Dispersion nach einem der Ansprüche 1 bis 7, **dadurch gekennzeichnet, dass** es sich bei dem Teil A des ampholytischen Copolymers um eine makromolekulare Kette A mit anionischen oder potentiell anionischen Einheiten $A_A$, die sich von anionischen oder potentiell anionischen Monomeren $A_A$ ableiten, handelt und das ampholytische Copolymer aus den folgenden Copolymeren ausgewählt ist:

- (Block A)-(Block B)-Diblockcopolymer, wobei der Teil A den Block A bildet und die makromolekulare Kette B den Block B bildet,
- (Block B) - (Block A) - (Block B)-Triblockcopolymer, wobei der Teil A den Block A bildet und die makromolekulare Kette B den Block B bildet,
- (Grundgerüst A)-(Seitenketten B)-Kammcopolymer, wobei der Teil A das Grundgerüst A bildet und das Copolymer mehrere makromolekulare Ketten B, die jeweils an einem ihrer Enden an das Grundgerüst A gebunden sind, umfasst.

**12.** Dispersion nach Anspruch 11, **dadurch gekennzeichnet, dass** es sich bei dem ampholytischen Copolymer um ein lineares Diblock- oder Triblockcopolymer handelt, dessen Block A und/oder Block B sich von ethylenisch ungesättigten Monomeren ableitet.

**13.** Dispersion nach einem der vorhergehenden Ansprüche, **dadurch gekennzeichnet, dass** es sich bei den Einheiten $B_C$ um kationische Einheiten handelt, die aus den Einheiten ausgewählt sind, die sich von den folgenden kationischen Monomeren ableiten:

- Trimethylammoniumpropylmethacrylatchlorid,
- Trimethylammoniumethylacrylamid- oder -methacrylamidchlorid oder -bromid,
- Trimethylammoniumbutylacrylamid- oder -methacrylamidmethylsulfat,
- Trimethylammoniumpropylmethacrylamidmethylsulfat (MAPTA MeS),
- (3-Methacrylamidopropyl)trimethylammoniumchlorid (MAPTAC),
- (3-Acrylamidopropyl)trimethylammoniumchlorid (APTAC),
- Methacryloyloxyethyltrimethylammoniumchlorid oder -methylsulfat,
- Acryloyloxyethyltrimethylammoniumsalzen (ADAMQUAT),
- 1-Ethyl-2-vinylpyridinium- oder 1-Ethyl-4-vinylpyridiniumbromid, -chlorid oder -methylsulfat;
- N,N-Dimethyldiallylammoniumchlorid (DADMAC);
- Dimethylaminopropylmethacrylamid, N-(3-chlor-2-hydroxypropyl)trimethylammoniumchlorid (DIQUAT);
- dem Monomer der Formel

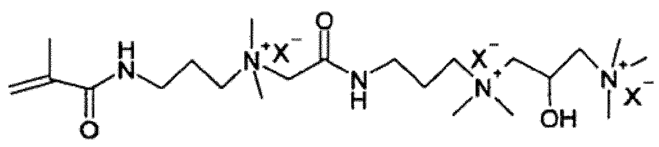

wobei $X^-$ für ein Anion, vorzugsweise Chlorid oder Methylsulfat, steht.

**14.** Dispersion nach einem der Ansprüche 1 bis 9 oder 11 bis 13, **dadurch gekennzeichnet, dass** es sich bei dem Teil A des ampholytischen Copolymers um eine makromolekulare Kette A mit anionischen oder potentiell anionischen Einheiten $A_A$, die sich von anionischen oder potentiell anionischen Monomeren $A_A$ ableiten, handelt und es sich bei den Einheiten $A_A$ um anionische oder potentiell anionische Einheiten handelt, die aus den Einheiten ausgewählt sind, die sich von den folgenden anionischen oder potentiell anionischen Monomeren $A_A$ ableiten:

- Acrylsäure, Methacrylsäure, Maleinsäure, Fumarsäure, Itaconsäure, N-Methacroylalanin, N-Acryloylglycin und Anhydriden davon und wasserlöslichen Salzen davon,
- 2-Sulfooxyethylmethacrylat, Vinylbenzolsulfonsäure, Allylsulfonsäure, 2-Acrylamido-2-methylpropansulfonsäure, Sulfoethylacrylat oder -methacrylat, Sulfopropylacrylat oder -methacrylat und wasserlöslichen Salzen davon,
- Vinylphosphonsäure und ethylenisch ungesättigten Phosphatestern.

**15.** Dispersion nach einem der vorhergehenden Ansprüche, **dadurch gekennzeichnet, dass** die makromolekulare Kette B des ampholytischen Copolymers Einheiten $B_{anders}$ umfasst, die sich von den Einheiten $B_C$ unterscheiden und sich von mindestens einem Monomer $B_{anders}$ ableiten, vorzugsweise ausgewählt aus hydrophilen oder hydrophoben neutralen Einheiten $B_N$, die sich von einem hydrophilen oder hydrophoben neutralen Monomer $B_N$ ableiten.

**16.** Dispersion nach Anspruch 15, **dadurch gekennzeichnet, dass** die makromolekulare Kette B des ampholytischen Copolymers 1 bis 100 Gew.-% Einheiten $B_C$, vorzugsweise 50 bis 100 Gew.-%, umfasst.

**17.** Dispersion nach einem der Ansprüche 1 bis 9 oder 11 bis 16, **dadurch gekennzeichnet, dass** es sich bei dem Teil A des ampholytischen Copolymers um eine makromolekulare Kette A mit anionischen oder potentiell anionischen Einheiten $A_A$, die sich von anionischen oder potentiell anionischen Monomeren $A_A$ ableiten, handelt und die makromolekulare Kette A Einheiten $A_{anders}$ umfasst, die sich von den Einheiten $A_A$ unterscheiden und sich von mindestens einem Monomer $A_{anders}$ ableiten, vorzugsweise ausgewählt aus hydrophilen oder hydrophoben neutralen Einheiten AN, die sich von einem hydrophilen oder hydrophoben neutralen Monomer AN ableiten.

**18.** Dispersion nach Anspruch 17, **dadurch gekennzeichnet, dass** die makromolekulare Kette A des ampholytischen Copolymers 1 bis 100 Gew.-% Einheiten $A_A$, vorzugsweise 50 bis 100 Gew.-%, umfasst.

## Claims

**1.** Colloidal dispersion of inorganic particles in a liquid phase, **characterized in that** it comprises an ampholytic copolymer comprising at least one macromolecular chain B and a part A bonded to a single end of at least one macromolecular chain B, in which:

- the macromolecular chain B comprises cationic units $B_C$ deriving from cationic monomers $B_C$,
- the part A is a polymeric or nonpolymeric group comprising at least one anionic or potentially anionic group.

**2.** Dispersion according to Claim 1, **characterized in that** it exhibits a positive zeta potential within a pH range of between 1 and 11, more particularly between 3 and 11.

**3.** Dispersion according to Claim 1 or 2, **characterized in that** the inorganic particles are particles based on an oxide, on a hydroxide and/or on an oxyhydroxide of a metal element chosen from cerium, titanium, zirconium, aluminium and iron; a mixture of oxide, of hydroxide and/or of oxyhydroxide of cerium with at least one other element chosen from rare earth metals or tin or a mixture of oxide, of hydroxide and/or of oxyhydroxide of zirconium and of a trivalent rare earth metal.

**4.** Dispersion according to one of the preceding claims, **characterized in that** the inorganic particles are cerium oxide particles, these particles (secondary particles) exhibiting a mean size of at most 200 nm, these secondary particles being composed of primary particles having sizes exhibiting a mean value of at most 100 nm with a standard deviation having a value of at most 30% of the said mean size.

**5.** Dispersion according to Claim 4, **characterized in that** the primary particles have sizes which exhibit a standard deviation having a value of at most 20% of the said mean size.

**6.** Dispersion according to either of Claims 4 and 5, **characterized in that** the primary particles have sizes which exhibit a mean value of at most 80 nm, more particularly of at most 60 nm.

**7.** Dispersion according to one of the preceding claims, **characterized in that** the part A of the abovementioned ampholytic copolymer is chosen from the following groups:

- a macromolecular chain A comprising anionic or potentially anionic units $A_A$ deriving from anionic or potentially anionic monomers $A_A$,
- a chain end unit comprising at least one anionic or potentially anionic group.

**8.** Dispersion according to one of the preceding claims, **characterized in that** the cationic units $B_C$ of the macromolecular chain B comprise a quaternary ammonium group.

**9.** Dispersion according to one of the preceding claims, **characterized in that** the abovementioned anionic or potentially anionic group comprises, if appropriate in the acid form, a group chosen from the following groups:

- the carboxylate group $-COO^-$
- the sulphonate group $-SO_3^-$
- the sulphate group $-SO_4^-$
- the phosphonate group $-PO_3^{2-}$
- the phosphate group $-PO_4^{2-}$.

**10.** Dispersion according to one of the preceding claims, **characterized in that** the ampholytic copolymer is a telomer with the structure A-B, where A is a chain end unit comprising at least one anionic or potentially anionic group.

**11.** Dispersion according to one of Claims 1 to 7, **characterized in that** the part A of the ampholytic copolymer is a macromolecular chain A comprising anionic or potentially anionic units $A_A$ deriving from anionic or potentially anionic monomers $A_A$ and the ampholytic copolymer is chosen from the following copolymers:

- (block A)-(block B) diblock copolymer, the part A constituting the block A and the macromolecular chain B constituting the block B,
- (block B)-(block A)-(block B) triblock copolymer, the part A constituting the block A and the macromolecular chain B constituting the block B,
- (backbone A)-(side chains B) comb copolymer, the part A constituting the backbone A and the copolymer comprising a plurality of macromolecular chains B each bonded to the backbone A at one of their ends.

**12.** Dispersion according to Claim 11, **characterized in that** the ampholytic copolymer is a linear diblock or triblock copolymer, the block A and/or the block B of which derives from ethylenically unsaturated monomers.

**13.** Dispersion according to one of the preceding claims, **characterized in that** the units $B_C$ are cationic units chosen from the units deriving from the following cationic monomers:

- trimethylammoniopropyl methacrylate chloride,
- trimethylammonioethylacrylamide or -methacrylamide chloride or bromide,
- trimethylammoniobutylacrylamide or -methylacrylamide methyl sulphate,
- trimethylammoniopropylmethacrylamide methyl sulphate (MAPTA MeS),
- (3-methacrylamidopropyl)trimethylammonium chloride (MAPTAC),
- (3-acrylamidopropyl)trimethylammonium chloride (APTAC),
- methacryloyloxyethyltrimethylammonium chloride or methyl sulphate,
- acryloyloxyethyltrimethylammonium salts (ADAMQUAT),
- 1-ethyl-2-vinylpyridinium or 1-ethyl-4-vinylpyridinium bromide, chloride or methyl sulphate;
- N,N-dimethyldiallylammonium chloride (DADMAC);
- dimethylaminopropylmethacrylamide, N-(3-chloro-2-hydroxypropyl)trimethylammonium chloride (DIQUAT);
- the monomer of formula:

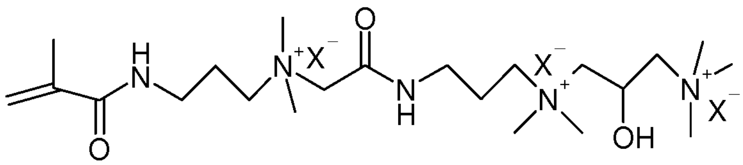

where $X^-$ is an anion, preferably chloride or methyl sulphate.

**14.** Dispersion according to one of Claims 1 to 9 or 11 to 13, **characterized in that** the part A of the ampholytic copolymer is a macromolecular chain A comprising anionic or potentially anionic units $A_A$ deriving from anionic or potentially anionic monomers $A_A$ and **in that** the units $A_A$ are anionic or potentially anionic units chosen from the units deriving from the following anionic or potentially anionic monomers $A_A$:

- acrylic acid, acrylic anhydride, methacrylic acid, methacrylic anhydride, maleic acid, maleic anhydride, fumaric acid, itaconic acid, N-methacryloylalanine, N-acryloylglycine and their water-soluble salts,
- 2-sulphooxyethyl methacrylate, vinylbenzenesulphonic acid, allylsulphonic acid, 2-acrylamido-2-methylpropanesulphonic acid, sulphoethyl acrylate or methacrylate, sulphopropyl acrylate or methacrylate, and their water-soluble salts,
- vinylphosphonic acid or ethylenically unsaturated phosphate esters.

**15.** Dispersion according to one of the preceding claims, **characterized in that** the macromolecular chain B of the ampholytic copolymer comprises units $B_{other}$ other than the units $B_C$, deriving from at least one monomer $B_{other}$, preferably chosen from neutral hydrophilic or hydrophobic units $B_N$ deriving from a neutral hydrophilic or hydrophobic monomer $B_N$.

**16.** Dispersion according to Claim 15, **characterized in that** the macromolecular chain B of the ampholytic copolymer comprises from 1 to 100% by weight of units $B_C$, preferably from 50% to 100% by weight.

**17.** Dispersion according to one of Claims 1 to 9 or 11 to 16, **characterized in that** the part A of the ampholytic copolymer is a macromolecular chain A comprising anionic or potentially anionic units $A_A$ deriving from anionic or potentially anionic monomers $A_A$ and **in that** the macromolecular chain A comprises units $A_{other}$ other than the units $A_A$, deriving from at least one monomer $A_{other}$, preferably chosen from neutral hydrophilic or hydrophobic units AN deriving from a neutral hydrophilic or hydrophobic monomer $A_N$.

**18.** Dispersion according to Claim 17, **characterized in that** the macromolecular chain A of the ampholytic copolymer comprises from 1 to 100% by weight of units $A_A$, preferably from 50% to 100% by weight.

Figure 1

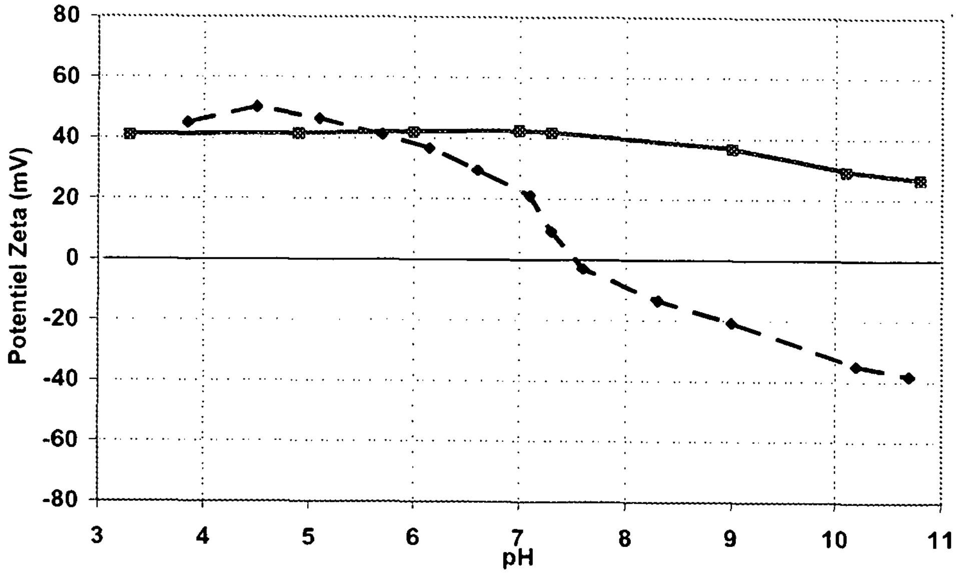


Figure 2

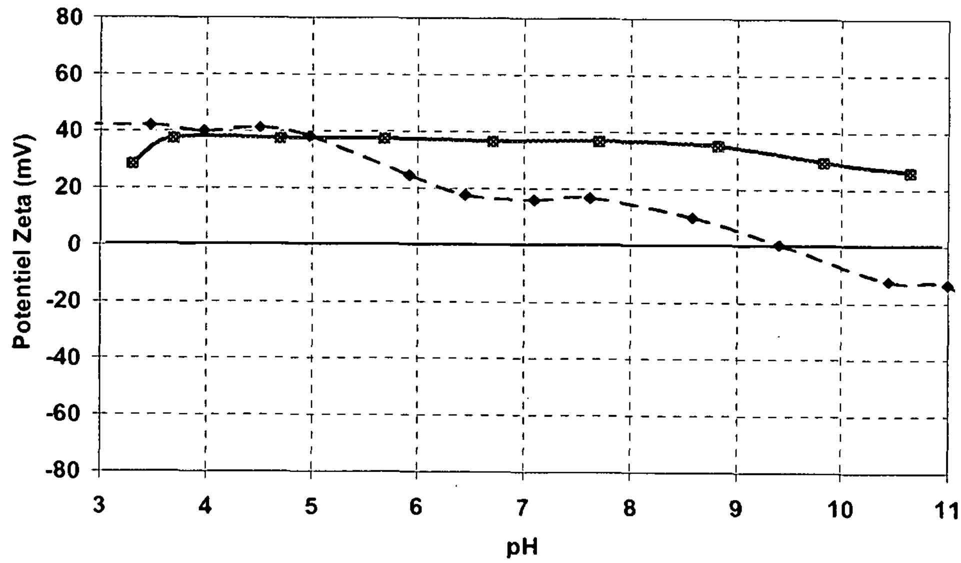

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 6905814 B
- WO 2006111650 A
- WO 9858974 A
- WO 0075207 A
- WO 0142312 A
- WO 9801478 A
- WO 9931144 A
- WO 0226836 A
- WO 0210223 A
- WO 9903894 A
- WO 9630421 A
- WO 0039169 A
- WO 0037507 A


### Littérature non-brevet citée dans la description


- *Journal of Gel Science Technology,* 1994, vol. 1, 223
- *Chemical Materials,* 1998, vol. 10, 3217-3223
- **BRUNAUER - EMMETT- TELLER.** *The Journal of the American Chemical Society,* 1938, vol. 60, 309
- **OTU et al.** *Makromol. Chem. Rapid. Commun.,* 1982, vol. 3, 127
- **TATEMOTO et al.** Jap. Daikin Kogyo Co ltd, 1975, vol. 127, 991
- **MATYJASZEWSKI et al.** *Macromolecules,* 1995, vol. 28, 2093
- **D. BRAUN et al.** *Macromol. Symp.,* 1996, vol. 111, 63
- **WAYLAND et al.** *J. Am. Chem. Soc.,* 1994, vol. 116, 7973